(19) Europäisches Patentamt
European Patent Office
Office européen des brevets

(11) **EP 2 695 924 A2**

(12) **EUROPÄISCHE PATENTANMELDUNG**

(43) Veröffentlichungstag:
**12.02.2014 Patentblatt 2014/07**

(21) Anmeldenummer: **13003882.1**

(22) Anmeldetag: **02.08.2013**

(51) Int Cl.:
*C09J 5/06* (2006.01)  *C09J 163/00* (2006.01)
*C08J 5/04* (2006.01)  *B29C 65/02* (2006.01)
*B29C 35/08* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.08.2012 DE 102012015924**

(71) Anmelder: **Fraunhofer-Gesellschaft zur Förderung der angewandten Forschung e.V.**
**80686 München (DE)**

(72) Erfinder:
• **Marchegiani, Marco**
  **64283 Darmstadt (DE)**
• **Kreickenbaum, Alexandra**
  **64380 Roßdorf (DE)**
• **Bergmann, Marvin**
  **63755 Alzenau (DE)**
• **Wieser, Jürgen**
  **64372 Ober-Ramstadt (DE)**
• **Spahn, Peter**
  **63457 Hanau (DE)**

(74) Vertreter: **Gagel, Roland**
**Patentanwalt Dr. Roland Gagel**
**Landsberger Strasse 480a**
**81241 München (DE)**

(54) **Verfahren zur Herstellung einer Klebeverbindung oder eines Verbundwerkstoffes und dafür geeigneter Klebe- oder Matrixwerkstoff**

(57) Die vorliegende Erfindung betrifft ein Verfahren zur Herstellung einer Klebeverbindung zwischen zwei Bauteilen, bei dem ein Klebstoff eingesetzt wird, der mit wenigstens zwei unterschiedlichen Härtungsmechanismen aushärtbar ist. Ein erster Härtungsmechanismus erzeugt dabei eine geringere Steifigkeit des Klebstoffes als wenigstens ein zweiter Härtungsmechanismus. Die zur Verbindung der Bauteile aufgebrachte Schicht des Klebstoffes wird mit dem ersten Härtungsmechanismus im Bereich zwischen den Bauteilen über die gesamte Schicht und mit wenigstens dem zweiten Härtungsmechanismus nur lokal gehärtet, so dass die Steifigkeit der Schicht des Klebstoffes im Bereich zwischen den Bauteilen variiert. In gleicher Weise lässt sich ein Verbundwerkstoff oder eine Verbundwerkstoffschicht mit einem Matrixwerkstoff herstellen, bei dem der Matrixwerkstoff lokal unterschiedlich gehärtet wird. Die Erfindung betrifft auch einen für das Verfahren geeigneten Kleb- oder Matrixwerkstoff. Mit dem Werkstoff und dem zugehörigen Verfahren können Klebeverbindungen, Verbundwerkstoffe oder Verbundwerkstoffschichten hergestellt werden, die eine gezielte lokale Variation der mechanischen Moduln bzw. der Steifigkeit aufweisen.

Fig. 1

EP 2 695 924 A2

## Beschreibung

### Technisches Anwendungsgebiet

Die vorliegende Erfindung betrifft ein Verfahren zur Herstellung einer Klebeverbindung zwischen zwei Bauteilen oder zur Herstellung eines Verbundwerkstoffes sowie einen dafür geeigneten Klebstoff oder Matrixwerkstoff.

Moderne, ressourcen- und energieeffiziente Konstruktionen verlangen heutzutage häufig die kraftschlüssige Verbindung unterschiedlichster Materialien. Die Klebetechnik hat deshalb außerordentlich an Bedeutung für die Konstruktion und Herstellung unterschiedlichster Produkte gewonnen. Besondere anspruchsvoll ist es dabei, Klebeverbindungen in tragender Funktion auszulegen und auszuführen. Beim Versagen solcher Strukturklebungen drohen meist hohe Schäden. Es ist deshalb von besonderem wirtschaftlichem Interesse, verbesserte Klebstoffe und Klebetechniken für Strukturklebungen zu entwickeln.

Einfach überlappende Klebungen sind die am häufigsten angewendete Technik der Klebeverbindung. Allerdings verteilen sich die Spannungen, die durch Einwirken äußerer Zugkräfte auf die Verbindung entstehen, stets ungleichmäßig über die Klebefläche. Würde es gelingen, diese Kräfte gleichmäßiger zu verteilen und Spannungsspitzen zu vermeiden, könnten die Klebungen höher belastet werden. Dieser Sachverhalt ist seit langem bekannt.

Bei einer einfach überlappenden, unter Zugspannung stehenden Klebung zweier elastischer Fügeteile wirken die Kräfte nicht co-linear, wodurch die Fügeteile Zug- und Biegebelastungen und die Klebschicht gleichzeitig Scher- und Schälbelastungen ausgesetzt werden. Weiterhin besitzen reale Fügeteile eine gewisse Elastizität, d.h. sie deformieren sich unter Last. Daraus resultiert eine inhomogene Spannungsverteilung. Mit wachsendem Abstand von der Mitte der Überlappungszone nehmen die Scherspannungen in der Klebeschicht zu und werden am Rand der Klebezone maximal. Unter Vernachlässigung des spannungsfreien Zustandes in der Kante der Klebstoffschicht zur Luft ist das Verhältnis n von maximaler Scherspannung $\tau_m$ zur mittleren Scherspannung $\tau_m$ proportional der Quadratwurzel aus dem Verhältnis des Schermoduls G des Klebstoffs zu dem Elastizitätsmodul E der Fügeteile:

$$n = \frac{\tau_m}{\tau_M} = \sqrt{\frac{Gl^2}{2Et\delta'}}$$

mit $\tau_m$ = mittlere Scherspannung, $\tau_m$ = Spitzenscherspannung, 1 = Abstand vom Überlappungsmittelpunkt, t = Fügeteildicke, $\delta'$ = Klebstoffschichtdicke, G = Schermodul des Klebstoffs, E = Elastizitätsmodul der Fügeteile.

Diese Formel impliziert, dass die Spannungsspitzen im Randbereich vermieden werden können, wenn der Schermodul G des Klebstoffs nach außen hin geeignet abnimmt. Diese Maßnahme würde somit die Gesamtfestigkeit der Klebung erhöhen. Diese qualitative Vorhersage wurde durch numerische Berechnungen und Experimente bestätigt.

### Stand der Technik

Allerdings war es bisher schwierig, den Modul der Klebstoffschicht kontinuierlich zu variieren. Bisherige experimentelle Arbeiten konzentrierten sich deshalb darauf, mit einfachen Modellsystemen das Prinzip der Spannungsspitzenreduktion durch Modulvariation zu bestätigen. Vielfach wurden zwei Klebstoffe, ein weicherer im Randbereich und ein härterer im zentralen Bereich der Klebung, verwendet, so dass eine stufenweise Variation des Moduls resultierte. Die unterschiedliche Steifigkeit der zwei Klebstoffe wurde erzielt, indem unterschiedliche Fabrikate verwendet oder ein Klebstoff durch Zugabe eines CTBN-Kautschuk-Adduktes weich gemacht wurde. Eine kontinuierliche, aber schlecht kontrollierbare Variation des Moduls wurde erzielt, indem manuell vor dem Fügen Glaskügelchen in unterschiedlicher Dichte in eine vorher einheitliche Klebstoffschicht gestreut wurden. Bereits mit diesen einfachen experimentellen Systemen konnte die Zunahme der Festigkeit der modifizierten Klebung deutlich gezeigt werden, sowohl für stufenweise als auch für kontinuierliche Variation der mechanischen Moduln. Kontinuierliche, insbesondere exponentielle Gradienten erwiesen sich in der Simulation als besonders effektiv. Ein praxistaugliches Herstellverfahren für Klebungen mit kontinuierlichen Gradienten existiert jedoch bis heute noch nicht.

Auch bei Verbundwerkstoffen oder Verbundwerkstoffschichten, bei denen einzelne Fasern oder Teilchen in einen Matrixwerkstoff eingebettet werden, kann eine Variation der Steifigkeit des Matrixwerkstoffes über den Verbundwerkstoff oder die Verbundwerkstoffschicht von Vorteil sein. So kann durch Einsatz eines duktilen Matrixharzes auf der Zugseite eines Verbundwerkstoffes und eines steifen Matrixwerkstoffes auf der Druckseite die Biegefestigkeit erheblich gesteigert werden. Weiterhin kann die gezielte Modifikation z.B. im Bereich von Lasteinleitungsstellen und Durchbrüchen die Gesamtbelastbarkeit erhöhen.

Für zahlreiche Anwendungen zum Vergießen, Abdichten, Beschichten oder Kleben sind so genannte Dual-Cure Systeme bekannt, die eine gleichzeitige oder nacheinander erfolgende Härtung mit zwei unterschiedlichen Härtungsmechanismen ermöglichen.

So beschreibt die US 4952342 eine Masse zum Vergießen elektrischer Komponenten, die aus zwei Harzsystemen besteht, einem ersten, das mit UV-Strahlung härtet, und einem zweiten, das thermisch ausgehärtet wird. Im ersten Härtungsschritt wird mit UV-Strahlung gehärtet. Dadurch wird die Harzmischung verfestigt, so dass sie im thermischen Härtungsschritt nicht wegfließt und sich keine Kanäle durch später entweichende Gase bilden können.

Die US 5547713 beschreibt UV-härtende Epoxyformulierungen, die zum Versiegeln der Rückseite keramischer Bauteile verwendet werden. Bei dieser Anwendung kann nicht die gesamte Fläche von der UV-Strahlung beleuchtet werden. Um unbeleuchtete Bereiche auszuhärten, wird deshalb ausgenutzt, dass im Beisein von Kupfersalzen und OH-funktionellen Polymeren die Generierung der Säure aus dem Photoinitiator auch thermisch ausgelöst werden kann. Die Druckschrift kombiniert also UV-Härtung und thermische Härtung, indem der Photoinitiator sowohl durch UV-Bestrahlung als auch thermisch aktiviert wird. Angestrebt wird eine gleichmäßige Aushärtung der gesamten Fläche.

Die US2003/0207956 beschreibt ein Dual-Cure System für Beschichtungsstoffe, vorzugsweise für poröse Materialien, in dem Strahlenhärtung und thermische Härtung kombiniert werden. Es sollen dabei ggf. unzureichende Strahlenhärtung durch einen zweiten Härtungsmechanismus ausgeglichen oder unzureichende thermische Härtung durch Strahlenhärtung ausgeglichen oder Oberflächenfehler wie Blasen oder Poren vermieden werden. Die beschriebene Formulierung enthält mindestens eine strahlenhärtende Komponente, eine thermisch härtend wirkende Komponente und eine thermisch härtbare Komponente, deren funktionelle Gruppen mit denen der thermisch härtend wirkenden Komponente reagieren. Die bevorzugte thermische Härtungsreaktion ist die Reaktion von OH-funktionellen Komponenten mit Polyisocyanaten, bei der Polyurethane gebildet werden.

Bei den der Anmelderin bekannten Anwendungen von Dual-Cure Systemen besteht das Ziel stets darin, ein möglichst mechanisch einheitliches Endprodukt zu erzeugen. So werden Dual-Cure Techniken insbesondere bei UV- oder lichthärtenden Klebstoffen und Lacken eingesetzt, wenn nicht sichergestellt werden kann, dass die komplette Lack- oder Klebstoffschicht gleichmäßig bestrahlt werden kann. Der zweite, oft thermisch ausgelöste Härtungsmechanismus sorgt dann für eine ausreichende Durchhärtung unbelichteter Bereiche.

Aus DE 103 47 652 A1 ist eine Klebeverbindung von mindestens zwei Fügepartnern bekannt, bei dem zum Ausgleich von inneren Spannungen aufgrund unterschiedlicher Wärmeausdehnungskoeffizienten der Fügepartner entweder eine Klebeschicht mit variierter Schichtdicke und/oder mit variierender Zusammensetzung der Komponenten der Klebeschicht vorgesehen wird.

Die DE 10 2007 015 261 A1 offenbart eine Reaktivmasse mit einem thermisch initiierbaren Matrixbildner und einem Energie absorbierenden Initiator. Durch eine feine Verteilung des Initiators kann eine homogen gleichbleibend hohe Festigkeit der thermisch initiierten und durchreagierten Reaktivmasse erhalten werden.

Aus US 5,977,682 ist ein Dual-Cure-Klebstoff bekannt, der sowohl durch Bestrahlung mit Elektronen als auch thermisch ausgehärtet werden kann. Durch einen Bestrahlungsschritt soll der Klebstoff über die gesamte Klebefläche nur teilweise ausgehärtet werden. Die vollständige Härtung erfolgt dann innerhalb von 72h bei Raumtemperatur, wobei die Härtung unabhängig von der erhaltenen Strahlungsdosis ist.

Die DE 602 07 075 T2 beschreibt einen Beschichtungs- oder Klebstoff aus zwei untereinander reaktiven Oligomeren. Dabei handelt es sich um reaktive, in der Schmelze verarbeitbare Materialien, die durch verschiedene stufenweise Wachstumsmechanismen gehärtet werden können, um einheitliche Beschichtungen zu ergeben.

Die Aufgabe der vorliegenden Erfindung besteht darin, ein Verfahren zur Herstellung einer Klebeverbindung, eines Verbundwerkstoffes oder einer Verbundwerkstoffschicht sowie einen dafür geeigneten Kleb- oder Matrixwerkstoff anzugeben, die eine gezielte örtliche Variation der mechanischen Steifigkeit der Klebeverbindung, des Verbundwerkstoffes oder der Verbundwerkstoffschicht ermöglichen.

**Darstellung der Erfindung**

Die Aufgabe wird mit den Verfahren und dem Kleb- oder Matrixwerkstoff gemäß den Patentansprüchen 1, 21 und 25 gelöst. Vorteilhafte Ausgestaltungen der Verfahren sowie des Kleb- oder Matrixwerkstoffes sind Gegenstand der abhängigen Patentansprüche oder lassen sich der nachfolgenden Beschreibung sowie den Ausführungsbeispielen entnehmen.

Bei dem vorgeschlagenen Verfahren zur Herstellung einer Klebeverbindung zwischen zwei Bauteilen wird ein Klebstoff eingesetzt, der mit wenigstens zwei unterschiedlichen Härtungsmechanismen aushärtbar ist, von denen ein erster Härtungsmechanismus eine geringere Steifigkeit des Klebstoffes erzeugt als wenigstens ein zweiter Härtungsmechanismus. Die zur Verbindung der Bauteile auf mindestens eines der Bauteile aufgebrachte Schicht dieses Klebstoffes wird mit dem ersten Härtungsmechanismus im Bereich zwischen den Bauteilen über die gesamte Schicht und mit wenigstens dem zweiten Härtungsmechanismus nur gezielt lokal an den Stellen gehärtet, die eine höhere Steifigkeit erhalten sollen, so dass die Steifigkeit der Schicht des Klebstoffes im Bereich zwischen den Bauteilen in gewünschter Weise variiert.

Die der erfindungsgemäßen Lösung zugrunde liegende Idee besteht somit darin, zum Erzeugen der Modulvariation in der Klebeschicht wenigstens zwei Härtungsmechanismen in einem Klebstoff in geeigneter Weise zu kombinieren:

- Ein erster Härtungsmechanismus, der zu einem weicheren, flexibleren Produkt führt, soll die gesamte Klebstoffschicht erfassen. Vorteilhafterweise wird er durch Wärme ausgelöst. Andere (erste) Härtungsmechanismen, beispielsweise chemische Reaktion mit einem zugemischten Härter bei Raumtemperatur (2-K Systeme), durch das Einwirken von Feuchte (Feuchtigkeitshärtung) oder sogar das einfache, rein physikalische Verfestigen durch Abkühlen (Hotmelts), sind prinzipiell auch vorstellbar.
- Lokal wird zusätzlich wenigstens ein zweiter Härtungsmechanismus ausgelöst, der die Vernetzungsdichte erhöht und die Klebstoffschicht örtlich aufhärtet. Vorteilhafterweise wird diese lokale Aufhärtung durch Strahlung ausgelöst, weil sie zeitlich, örtlich und in der Intensität einfach variiert werden kann. So kann die örtliche Intensitätsverteilung von UV-Strahlung in einfacher Weise, beispielsweise durch eine Blende, einen Filter oder durch Abscannen mit einem Laser, kontrolliert und gesteuert werden, um angepasste Modulgradienten, sowohl stufenartige als auch kontinuierliche, nach Wunsch zu erzeugen.

Mit dem vorgeschlagenen Verfahren kann beispielsweise eine Variation der Klebstoffsteifigkeit von weich, weniger steif am Rand der Klebung zu härter und steifer in der Mitte des überlappenden Bereiches der Bauteile erreicht werden. Diese Variation kann stufenweise sein, besonders bevorzugt ist diese Variation der mechanischen Moduln aber kontinuierlich. Mit dem vorgeschlagenen Verfahren kann somit auf einfache und gut steuerbare Weise während des Aushärtens in einem vorher einheitlichen Klebstoff eine kontinuierliche oder stufenweise Modulvariation erzeugt werden. Die Bereiche mit geringerer Steifigkeit, die lediglich dem ersten Härtungsmechanismus gehärtet wurden, zeigen dabei auch eine höhere Duktilität als die zusätzlich aufgehärteten Bereiche, wodurch sie sich stärker dehnen lassen. Damit nimmt bei der oben beschriebenen überlappenden Klebung nicht nur die Steifigkeit von der Mitte der Überlappung zu den Rändern hin ab sondern auch die Duktilität in dieser Richtung zu. Es wird dazu vorzugsweise ein thermisch härtender Epoxy-Klebstoff eingesetzt, dessen Härte lokal durch eine gezielte UV-Bestrahlung vor dem Fügen der Fügeteile erhöht werden kann.

Das obige Konzept zur Variation der Härte des Klebstoffes lässt sich auch bei der Herstellung eines Verbundwerkstoffes oder einer Verbundwerkstoffschicht nutzen, bei der Fasern und/oder Teilchen in einen Matrixwerkstoff eingebettet werden. Der Matrixwerkstoff wird dabei in gleicher Weise gewählt, wie der obige Klebstoff, so dass er mit wenigstens zwei unterschiedlichen Härtungsmechanismen aushärtbar ist, von denen ein erster Härtungsmechanismus eine geringere Steifigkeit des Matrixwerkstoffes erzeugt als wenigstens ein zweiter Härtungsmechanismus. Nach der Vermischung des Matrixwerkstoffes mit den Fasern und/oder Teilchen wird dieser dann mit dem ersten Härtungsmechanismus über die gesamte Verbundwerkstoffschicht und mit wenigstens dem zweiten Härtungsmechanismus nur gezielt lokal an den gewünschten Stellen gehärtet, so dass die Steifigkeit des Matrixwerkstoffes in gewünschter Weise über den Verbundwerkstoff oder die Verbundwerkstoffschicht variiert. In einer bevorzugten Ausgestaltung wird diese Variation so durchgeführt, dass der Matrixwerkstoff mit wenigstens dem zweiten Härtungsmechanismus nur auf einer Seite des Verbundwerkstoffes oder der Verbundwerkstoffschicht gehärtet wird, so dass die Steifigkeit des Matrixwerkstoffes auf einer Seite des Verbundwerkstoffes oder der Verbundwerkstoffschicht höher ist als auf der gegenüberliegenden Seite.

Die beiden Härtungsmechanismen können prinzipiell nacheinander, in beliebiger Reihenfolge oder gleichzeitig ausgelöst werden. Bei Nutzung wenigstens eines durch Strahlung ausgelösten zweiten Härtungsmechanismus ist zur Herstellung einer Klebeverbindung allerdings die im Folgenden beschriebene Vorgehensweise besonders vorteilhaft, um auch strahlungsundurchlässigere Fügepartner kleben zu können:

Nach dem Auftragen des Klebstoffes auf eines der zu fügenden Teile wird zuerst der aufzuhärtende Bereich bestrahlt. Besonders bevorzugt verfestigt der durch Strahlung aktivierte Härtungsmechanismus dabei den Klebstoff nicht sofort, der dadurch möglicherweise serine Klebrigkeit verlieren würde. Stattdessen soll die Bestrahlung den (zweiten) Härtungsmechanismus, der örtlich aufhärten soll, zunächst nur vorbereiten, also präaktivieren. Die Reaktion soll so verzögert einsetzen, dass das Fügen der Teile nach der Bestrahlung noch möglich ist. Dann wird gefügt, weswegen die Klebstoffschicht weiterer Bestrahlung nicht mehr zugänglich ist. Anschließend wird sowohl die Härtung der gesamten Klebstoffschicht nach dem ersten Mechanismus ausgelöst, der das weichere Produkt ergibt, als auch örtlich die Aufhärtung zum Abschluss gebracht, beispielsweise indem die Klebung auf eine Temperatur oberhalb Raumtemperatur erwärmt wird.

Die Möglichkeit der präaktivierten Härtung ist von kationisch UV-härtenden Epoxyklebstoffen bereits bekannt. Geeignete Produkte sind kommerziell beispielsweise von der Firma DELO (Katiobond-Produkte) verfügbar.

Für ein praxisgerechtes und industrietaugliches Klebstoffsystem müssen allerdings verschiedene weitere Bedingungen erfüllt werden, die die chemische Realisierung der Idee komplizieren. Besonders wichtig ist es, sicherzustellen, dass ein stabiler Endzustand erreicht wird:

Die Aufhärtung darf nicht nachträglich in die unbestrahlten Bereiche der Klebstoffschicht fortschreiten, die weicher bleiben sollen. Deshalb müssen sowohl in den Bereichen, in denen nur ein Härtungsmechanismus abläuft, als auch in den mit wenigstens zwei Härtungsmechanismen gehärteten Bereichen reaktive chemische Gruppen weitgehend abreagiert sein. Diese Notwendigkeit wird auch von der Beobachtung gestützt, dass unvollständig ausgehärtete Strukturklebstoffe zwar weich, aber im Allgemeinen mechanisch und im Kontakt mit Medien nicht belastbar und somit untauglich sind. Wird aber vollständige Aushärtung bereits in den einfach gehärteten Bereichen angestrebt, musste der Fachmann bisher zu dem Schluss kommen, dass es unmöglich ist, mit einem Dual-Cure System einen signifkanten Steifigkeitsgradienten zu erzeugen. Bevorzugt sollte mit dem vorgeschlagenen Verfahren hierbei eine Variation der Steifigkeit oder der Duktilität (z.B. Bruchdehnung) über die Schicht um mindestens 30% erreicht werden.

Auch Vorarbeiten zur Ermittlung eines geeigneten Klebstoffes führten zunächst nicht zu den gewünschten Eigenschaften. So wurde untersucht, ob es einen thermisch auszulösenden Härtungsmechanismus gibt, der mit der kationischen, präaktivierten UV-Härtung von Epoxidharzen kombinierbar ist, und ob sich durch unterschiedliche Kombinationen der beiden Mechanismen mechanische Unterschiede erzeugen lassen.

Bei der kationischen, UV-aktivierten Härtung von Epoxidharzen wird aus einem Photoinitiator durch UV-Bestrahlung eine kationisch aktive Spezies, meist das Proton einer starken Säure, freigesetzt, die die Oxiranringe des Epoxidharzes ringöffnend polymerisiert. Als Photoinitiator für die kationische, aktivierte UV-Härtung von Epoxidharzen sind Sulfonium- und Iodoniumsalze kommerziell verfügbar. Iodoniumsalze, die keine Benzol-Abspaltung bei der UV-Bestrahlung zeigen, sind aus toxikologischen Gründen vorzuziehen. Bei den Voruntersuchungen wurde erfolgreich das Iodoniumsalz Deuteron 1242 eingesetzt. Später wurde das vergleichbare Iodoniumsalz Irgacure 250 verwendet.

Es stellte sich heraus, das die typischerweise für die UV-Härtung verwendeten cycloaliphatischen Epoxidharze zu schnell reagierten. Anstatt einer Präaktivierung mit anschließender Durchhärtung wurde Hautbildung beobachtet, die das anschließende Fügen beeinträchtigt. Ein preiswertes Bisphenol-A-(BPA)-Flüssigharz, Epilox A 19-03, Leuna Harze, erwies sich als besser zu verarbeiten, weil es gleichmäßiger, auch in dicken Schichten, härtete und weniger zur Hautbildung neigte. Solche niedermolekularen BPA-Harze sind typische Hauptbestandteile kommerzieller Epoxy-Klebstoffe, was die Praxisrelevanz des gewählten Harztyps bestätigt. Bei diesen niedermolekularen BPA-basierten Flüssigharzen beträgt die mittlere Anzahl der Wiederholungseinheiten typischerweise n << 0,5. Daraus folgt, dass diese Harze fast keine OH-Gruppen besitzen. Höhermolekulare Harze, die mehr OH-Gruppen besitzen, sind fest und deshalb wenig tauglich, wenn flüssige Klebstoffformulierungen benötigt werden.

Bei der Auswahl des Härters für den thermisch auszulösenden Härtungsmechanismus stellte sich heraus, dass jegliche basisch reagierenden Stoffe die UV-Härtung wirkungsvoll verhinderten. Aminhärter und Dicyandiamiderivate schieden deshalb als Härter aus, gleichfalls tertiäre Amine, Ammoniumsalze, Imidazole, Urone und Guanidine als Beschleuniger oder Katalysatoren. Lediglich Anhydride wie Hexahydrophthalsäureanhydrid störten die UV-Härtung nicht. Allerdings wurde beobachtet, dass diese Anhydride alleine, ohne Mitverwenden eines typischerweise zugesetzten basischen Beschleunigers wie Ethylmethylimidazol, bei praxisgerechten Härtungstemperaturen bis 180°C keine ausreichende Härtungsreaktion bewirkten. Dieses Verhalten ist seit langem bekannt. Es wurde deshalb nach einem geeigneten, die UV-Härtung nicht beeinträchtigenden Beschleuniger für die Anhydridhärtung gesucht. Für die thermische Härtung von Epoxidharzen mit Anhydriden ist in der Literatur eine Vielzahl unterschiedlichster Stoffe als mögliche Beschleuniger beschrieben worden, als Alternative zu den üblichen stickstoffhaltigen Basen auch Metallverbindungen und phosphorhaltige Verbindungen. Vielversprechend erwiesen sich insbesondere bestimmte Metallkomplexe oder Metallchelate, weil sie die UV-Härtung wenig beeinträchtigten. Wegen der guten Wirksamkeit bei geringer Toxizität wurde schließlich Zinkchlorid, heiß gelöst in Acetylaceton, als Beschleuniger ausgewählt. Damit sollen andere Verbindungen des Zinks, insbesondere kommerziell erhältliche Zinkchelate oder -carboxylate wie Nacure XC 9206 von King Ind., Verbindungen anderer Metalle, Phophorverbindungen und andere literaturbekannte Beschleuniger jedoch nicht grundsätzlich ausgeschlossen werden.

Damit konnte ein einfaches Dual-Cure System mit den Komponenten

- Niedermolekulares, BPA-basiertes Epoxid-Flüssigharz: Epilox A 19-03,
- Anhydridhärter: Hexahydrophthalsäureanhydrid,
- Beschleuniger: Zinkchlorid, heiß gelöst in Acetylaceton (2,4-Pentandion),
- Photoinitiator für die kationische Epoxid-Härtung: Deuteron 1242

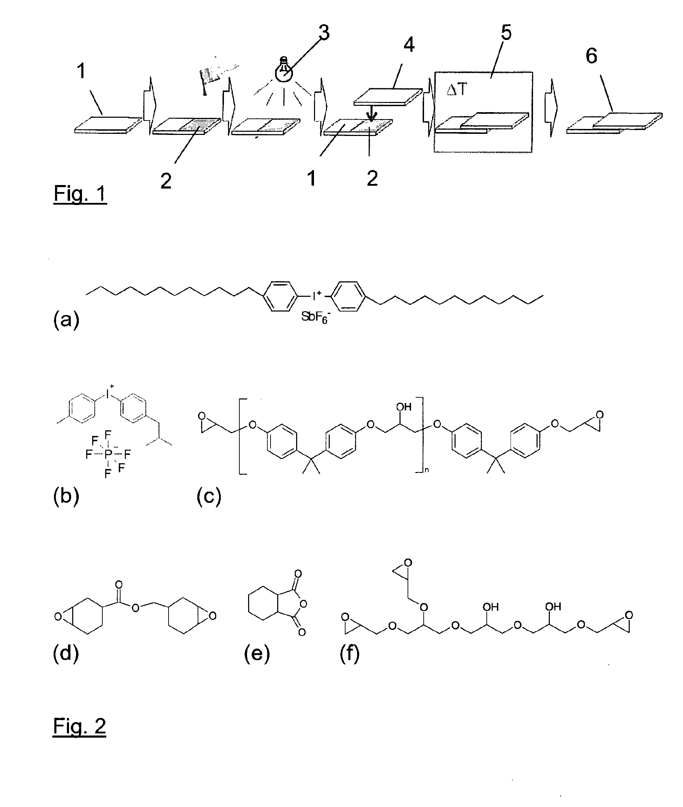

formuliert werden, das sowohl rein thermisch durch das Anhydrid als auch nach Präaktivierung mit UV-Bestrahlung kationisch bei Temperaturen von etwa 135°C ausgehärtet werden konnte. Die chemischen Idealformeln der Komponenten sind in Fig. 2 dargestellt. Fig. 2a zeigt dabei den Photoinitiator Deuteron 1242 (Bis(4-dodecylphenyl)-iodoniumhexafluoroantimonat, Fig. 2b den Photoinitiator Irgacure 250 (4-methylphenyl)[4-(2-methylpropyl)phenyl]-Iodonium hexafluorophosphat, Fig. 2c die Grundstruktur eines Bisphenol-A basierten Epoxidharzes (für Epilox A 1903 ist n-0,14), Fig. 2d das Cycloaliphatische Epoxidharz Uvacure 1500, Araldite CY 179, typischer Einsatz für kationische UV-Härtung, Fig. 2e ein Hexahydrophthalsäureanhydrid und Fig. 2f die Oligomere des Glycerin-Diglycidethers. Da es sich um technische Produkte handelt, ist durch Verunreinigungen mit Abweichungen von der Idealformel zu rechnen. Gemäß dem ermittelten Optimum für die Härtung mit Hexahydrophthalsäureanhydrid, wurde mit einem Massenverhältnis Epoxidharz : Anhydrid = 50 : 30, entsprechend einem Stoffmengenverhältnis n(Epoxid) : n(Anhydrid) = 1 : 0,7 gestartet. Weitere Versuche, mit vergleichbaren Ergebnissen, wurden mit reduziertem Anhydridgehalt bis zu einem Stoffmengenverhältnis n(Epoxid) : n(Anhydrid) = 1 : 0,35 durchgeführt.

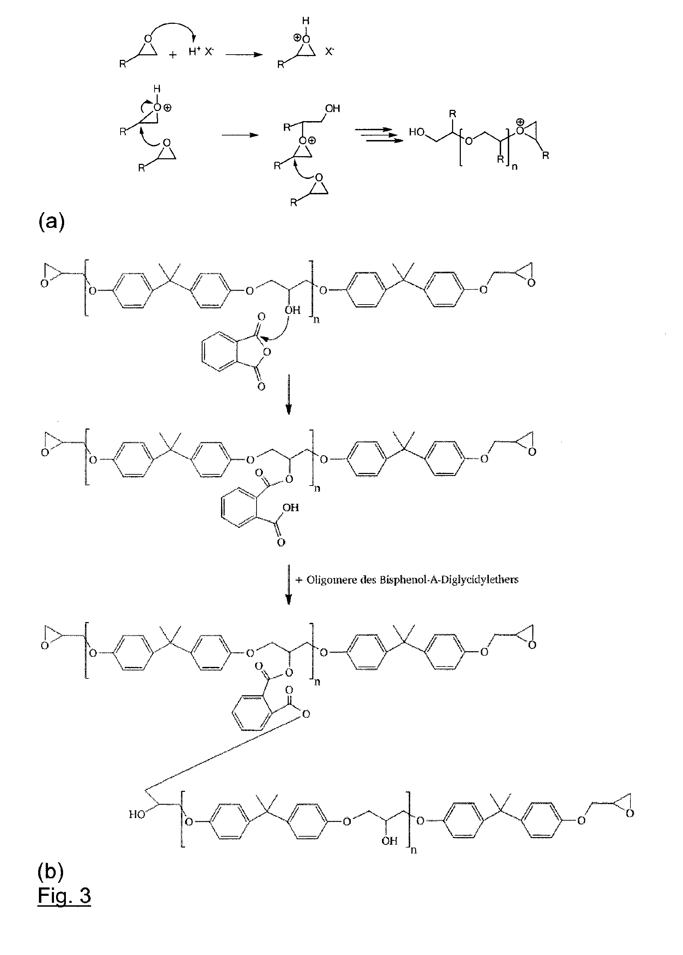

In der hergestellten Formulierung stellt das Epoxidharz Epilox A 19-03 Epoxidgruppen (Oxiranringe) für die Reaktion zur Verfügung, in guter Näherung zwei je Molekül in endständiger Position (n - 0,14). Fig. 3 fasst sehr stark vereinfacht die Grundreaktionen zusammen, mit denen bei der kationischen Polymerisation und der Anhydridhärtung der Formulierung zu rechnen ist. Unter der Einwirkung des Kations, das aus dem Photoinitiator freigesetzt wird, kann jede der beiden Epoxidgruppen mit den Epoxidgruppen weiterer Moleküle durch ringöffnende Polymerisation eine Polymerkette aufbauen. Es entsteht ein sehr engmaschiges Netzwerk. Stark vereinfacht ist die Reaktion in Fig. 3a schematisch dargestellt. Alternativ kann das Epoxidharz mit dem Anhydrid reagieren (Anhydridhärtung der Fig. 3b). Dabei kann jede Epoxidgruppe rechnerisch ein Anhydrid, welches zwei Carbonsäurefunktionen entspricht, vollständig umsetzen. Es können dabei in stark vereinfachter Betrachtung zwei Reaktionsschritte unterschieden werden. Das Anhydrid kann durch Reaktion mit OH-Gruppen einen Ester bilden, wobei gleichzeitig eine Carboxylgruppe frei wird, die in einem zweiten Schritt mit einer weiteren OH-Gruppe oder bevorzugt mit einem Epoxidring reagieren kann. Letztere Reaktion erzeugt erneut eine OH-Gruppe, die dann wieder für die Reaktion mit dem Anhydrid zur Verfügung steht. Der genaue Mechanismus der Anhydridhärtung hat sich als stark von der Art des verwendeten Beschleunigers abhängig erwiesen.

Aus der vereinfachten Betrachtung folgt, dass für die Formulierung gilt:

- Die kationische UV-Härtung benötigt nur Epoxidgruppen zur Polymerisation;
- Die Härtung durch das Anhydrid benötigt Epoxid- und Anhydridgruppen, auch während der Reaktion entstehende OH-Gruppen können mit weiterem Anhydrid reagieren;
- Das Epoxidharz stellt zu Beginn der Reaktion fast ausschließlich Epoxidgruppen zur Verfügung, die durch kationische, ringöffnende Polymerisation oder durch Reaktion mit dem Anhydrid verbraucht werden können;
- Damit in den Bereichen, in denen die kationische Härtung und die Härtung durch das Anhydrid gemeinsam wirken, nicht Anhydrid übrig bleibt, sollte mit einer möglichst geringen Anhydridkonzentration gearbeitet werden, möglichst unter dem für die reine Anhydridhärtung empfohlenen stöchiometrischen Verhältnis von n(Epoxid) . n(Anhydrid) = 1 : 0,7-0,8.

Es bestand die Hoffnung, dass das durch den Einbau des Anhydrids in das Netzwerk entstehende Produkt andere mechanische Eigenschaften, vorzugsweise eine höhere Flexibilität und geringere Steifigkeit, als das besonders engmaschig vernetzte, kationisch ringöffnend polymerisierte Produkt aufweisen würde. Leider zeigte sich, dass diese Erwartung nicht erfüllt wurde. Zwar konnte gezeigt werden, dass tatsächlich ein Dual-Cure System vorlag, das kationisch nach UV-Bestrahlung oder mit Anhydrid gehärtet werden konnte, die in den beiden Fällen erhaltenen Produkte waren aber mechanisch sehr ähnlich. Es wurden stets vergleichbar steife und wenig dehnbare Produkte erhalten. Die UV-Bestrahlung hat keine signifikante Auswirkung auf die Steifigkeit, für die der E-Modul ein Maß ist. Mit und ohne Bestrahlung wurde ein annähernd gleiches E-Modul gemessen. Dieses Dual-Cure-System ist daher nicht für eine spannungsspitzenreduzierte Klebung geeignet.

Bei weiteren Untersuchungen haben die Erfinder jedoch überraschenderweise gefunden, dass bei Verwenden spezieller Epoxidharze in bestimmten Stöchiometrien von Epoxidharz zu Anhydridhärter Dual-Cure Systeme resultieren, mit denen der gewünschte ausreichend starke mechanische Gradient in der Klebung durch örtliche UV-Bestrahlung erzeugt werden kann.

Diese Harze weisen folgende Besonderheiten auf:

- Sie tragen Epoxidgruppen, deren kationische UV-Härtung mit den üblichen Photoinitiatoren ausgelöst werden kann und
- die ebenso für eine Härtung mit Anhydriden tauglich sind;
- Sie tragen darüber hinaus OH-Gruppen oder bilden OH-Gruppen im Verlauf der Härtungsreaktion, die gleichfalls für die Reaktion mit Anhydriden tauglich sind;
- Die Menge dieser OH-Gruppen ist ausreichend, überschüssiges Anhydrid oder daraus gebildete Carbonsäure, die nicht bereits durch Epoxidgruppen zur Reaktion gebracht wurden, durch Reaktion zu binden.
- Die Menge der OH-Gruppen ist nicht so hoch, dass nachteilige Produkteigenschaften resultierten, die die gehärteten Produkte für die Praxis untauglich machen würden, beispielsweise weil sie wasserlöslich oder stark mit Wasser quellbar würden;

- Die Harze taugen dazu, flexiblere Härtungsprodukte zu bilden.

Die OH-Funktionen nehmen dabei eine besondere Rolle ein. OH-Gruppen sind bei Raumtemperatur nicht mit sich selbst reaktiv, sie benötigen für eine Härtungsreaktion eine komplementäre reaktive Gruppe wie beispielsweise eine Isocyanatfunktion. Produkte, die fast ausschließlich nur noch OH-Gruppen als potentiell reaktive Funktionen enthalten, erfüllen deshalb das Kriterium, dass sie bei Raumtemperatur als stabil und unreaktiv anzusehen sind. Sie sind deshalb im Endprodukt in erheblichen Anteilen unschädlich für die Langzeitstabilität und können wegen ihrer hohen Polarität sogar vorteilhaft sein, weil sie die Haftung von Klebstoffen auf Metallen erhöhen können.

Geeignete OH-funktionelle Epoxidharze sind kommerziell verfügbar, insbesondere für die Lackanwendung. Geeignete Harze sind beispielsweise die niederviskosen, oligomeren Glycidether des Glycerins (Glycidether GE100, Raschig; Epikote 812, Momentive) und hochmolekulare Epoxidharze des BPA-Typs mit n > 1 wie Epikote 1004, Epikote 1007 und 1009, Momentive; DER 663,664,667,668,669, Dow; Epilox A 85-02, Leuna Harze und Araldite GT 6084, 6097, 6099 von Huntsman. Die hochmolekularen Harze des BPA-Typs sind bei Raumtemperatur fest und können geeignet sein, um die Viskosität von flüssigen Klebstoffen zu erhöhen oder um Formulierungen für Klebstoffe zu formulieren, die als Klebstofffilm verarbeitet werden sollen. Selbstverständlich könnten auch ähnlich hochmolekulare, dadurch OH-reiche Epoxidharze anderer Zusammensetzung, beispielsweise auf Basis von Bisphenol-F, geeignet sein. Von diesen oligomeren oder hochmolekularen Harzen ist auch bekannt, dass sie im Gegensatz zu den niedermolekularen Harzen vergleichbarer Zusammensetzung flexiblere Produkte ergeben können.

Es ist jedoch möglicherweise nicht zwingend erforderlich, dass das Epoxidharz vor Beginn der Härtungsreaktionen alleiniger Träger der OH-Gruppen ist. So könnten auch durch

- Zumischung einer oligomeren oder polymeren, OH-reichen Komponente (Polyol),
- Verwenden einer OH-funktionellen Carbonsaure oder eines entsprechenden Anhydrids (Salicylsäure) als Härter,
- oder durch vorheriges Modifizieren des Anhydrids mit einer OH-haltigen Komponente (Adduktbildung, führt zu einem anhydrid- oder carboxy-funktionellen Polyester) die erfindungsgemäß hilfreichen OH-Funktionen in die Klebstoffformulierung eingeführt werden, so dass ähnlich taugliche Endprodukte nach der Härtung vorliegen.

Im Gegensatz zu der an OH-Gruppen armen Formulierung, die während der Voruntersuchungen erfolglos getestet wurde, stehen in den erfindungsgemäßen Formulierungen von Anfang an OH-Grüppen im Epoxidharz für die Reaktion mit dem Anhydridhärter zur Verfügung. Wie gezeigt werden konnte, hat dies ganz erhebliche Auswirkungen auf die mechanischen Eigenschaften der Produkte, die mit der Anhydridhärtung alleine gehärtet wurden, und der Produkte, die zusätzlich mit der kationischen UV-Härtung gehärtet wurden.

Weiterhin wurde gefunden, dass in den OH-reichen Formulierungen das stöchiometrische Verhältnis von Anhydridfunktionen zu Epoxidfunktionen entscheidend die Größe des mechanischen Unterschiedes zwischen den nur mit Anhydrid gehärteten Produkten und den zusätzlich UV-bestrahlten beeinflusst.

Die grundlegenden Prinzipien des erfindungsgemäßen Systems sind somit:

- Auf den gesamten Klebstoff wirkt ein erster Härtungsmechanismus, wobei es sich auch um einen physikalischen Vorgang (Schmelzkleber) handeln kann;
- Lokal wirkt wenigstens ein zweiter Härtungsmechanismus, vorzugsweise ausgelöst durch örtliche Bestrahlung;
- Wenigstens der zweite Härtungsmechanismus führt zu einer Aufhärtung des Klebstoffs.

Für eine chemische Umsetzung der Prinzipien sind in einer ersten Variante des Verfahrens Komponenten erforderlich mit

- mindestens einer ersten Sorte chemischer Funktionen, die sowohl reaktiv im lokalen als auch in dem auf den gesamten Klebstoff einwirkenden Härtungsmechanismus ist;
- mindestens einer zweiten Sorte chemischer Funktionen, die reaktiv in dem auf den gesamten Klebstoff einwirkenden Härtungsmechanismus ist;
- mindestens einer dritten Sorte chemischer Funktionen, die als Vernetzer sowohl mit der ersten als auch der zweiten Sorte chemischer Funktionen reagieren kann;
- sowohl durch den ersten Härtungsmechanismus als auch durch den zweiten Härtungsmechanismus wird ein stabiler Endzustand erreicht, bei dem reaktive Gruppen abreagiert sind;
- die unterschiedlichen chemischen Funktionen können auf unterschiedliche Moleküle verteilt oder gemeinsam an Molekülen vorhanden sein;
- die Formulierung kann weitere Komponenten enthalten, beispielsweise Additive und Füllstoffe.

Bei einer bevorzugten chemischen Umsetzung sind die ersten und zweiten chemischen Funktionen gemeinsam an Molekülen vorhanden.

Eine erfindungsgemäße Ausgestaltung des Kleb- oder Matrixwerkstoffes verwendet Formulierungen mit Komponenten, die folgende Voraussetzungen erfüllen:

- Die erste Sorte chemischer Funktionen, die reaktiv in einer lokalen Strahlenhärtung ist, ist die Epoxidgruppe. Die verwendeten Epoxidharze können niedermolekular (Reaktivverdünner), oligomer oder polymer sein.
- Die zweite chemische Funktion, die hauptsächlich reaktiv in der Härtung des gesamten, bestrahlten oder unbestrahlten Klebstoffs ist, ist die OH-Gruppe.
- Vorteilhafterweise enthält ein wesentlicher Anteil der Komponenten sowohl Epoxidgruppen als auch OH-Gruppen.
- Die dritte Sorte chemischer Funktionen, die als Vernetzer mit den Epoxidfunktionen und auch mit den OH-Funktionen reagieren kann, ist die Carbonsäurefunktion. Sie kann auch in dehydratisierter Form als Carbonsäureanhydridfunktion vorliegen.
- Die Formulierung kann weitere Komponenten, insbesondere Additive oder Füllstoffe enthalten.

In einem weiteren bevorzugten Verfahren wird als erster Härtungsmechanismus eine thermische Härtung und als wenigstens zweiter Härtungsmechanismus eine UV-Härtung eingesetzt. Dabei erfolgt die UV-Härtung durch wenigstens zwei unterschiedliche UV-initiierte Vernetzungsmechanismen.

Besonders bevorzugt ist dabei ein Verfahren, bei dem als erster Vernetzungsmechanismus eine radikalische Polymerisation erfolgt. Als zweiter Vernetzungsmechanismus reagieren Doppelbindungen in einer Komponente des Kleb- oder Matrixwerkstoffes mit Thiolen und eine Vernetzung erfolgt über eine Thiol-En-Reaktion.

In einer weiteren Variante des Verfahrens wird ein Kleb- oder Matrixwerkstoff eingesetzt, der mindestens eine erste Sorte chemischer Funktionen aufweist, die reaktiv im ersten Härtungsmechanismus sind, mindestens eine zweite Sorte chemischer Funktionen aufweist, die reaktiv sowohl im ersten als auch wenigstens im zweiten Härtungsmechanismus sind, mindestens eine dritte Sorte chemischer Funktionen aufweist, die als Vernetzer sowohl mit der ersten als auch mit der zweiten Sorte chemischer Funktionen reagieren kann, mindestens eine vierte Sorte chemischer Funktionen aufweist, die reaktiv sowohl im ersten als auch wenigstens im zweiten Härtungsmechanismus sind, und dass sowohl durch den ersten Härtungsmechanismus als auch durch den wenigstens zweiten Härtungsmechanismus ein stabiler Endzustand erreicht wird, bei dem reaktive Gruppen abreagiert sind. Besonders bevorzugt ist dabei, dass die erste Sorte chemischer Funktionen ausschließlich im ersten Härtungsmechanismus reaktiv ist, d.h. die erste Sorte chemischer Funktionen ist insbesondere nicht reaktiv im wenigstens zweiten Härtungsmechanismus.

Besonders bevorzugt ist ein Verfahren bei dem ein Kleb- oder Matrixwerkstoff eingesetzt wird, bei dem die erste Sorte chemischer Funktionen durch Epoxidgruppen, die zweite Sorte chemischer Funktionen durch Acrylat-Gruppen, die dritte Sorte chemischer Funktionen durch Amingruppen und die vierte Sorte chemischer Funktionen durch Thiolgruppen gebildet ist.

Ein weiterer erfindungsgemäßer Kleb- oder Matrixwerkstoff, insbesondere zur Herstellung einer Klebeverbindung oder einer Verbundwerkstoffschicht nach einem der Patentansprüche 17 bis 20, ist mit wenigstens zwei unterschiedlichen Härtungsmechanismen aushärtbar, von denen ein erster Härtungsmechansimus eine geringere Steifigkeit des Kleb- oder Matrixwerkstoffes erzeugt als wenigstens ein zweiter Härtungsmechanismus. Der Kleb- oder Matrixwerkstoff weist mindestens eine erste Sorte chemischer Funktionen auf, die reaktiv im ersten Härtungsmechanismus sind, weist mindestens eine zweite Sorte chemischer Funktionen auf, die reaktiv sowohl im ersten als auch wenigstens im zweiten Härtungsmechanismus sind, weist mindestens eine dritte Sorte chemischer Funktionen auf, die als Vernetzer sowohl mit der ersten als auch mit der zweiten Sorte chemischer Funktionen reagieren kann, und weist mindestens eine vierte Sorte chemischer Funktionen auf, die reaktiv sowohl im ersten als auch wenigstens im zweiten Härtungsmechanismus sind. Besonders bevorzugt ist dabei, dass die erste Sorte chemischer Funktionen ausschließlich im ersten Härtungsmechanismus reaktiv ist, d.h. die erste Sorte chemischer Funktionen ist insbesondere nicht reaktiv im wenigstens zweiten Härtungsmechanismus.

Bevorzugt zeichnet sich der Kleb- oder Matrixwerkstoff dadurch aus, dass die erste Sorte chemischer Funktionen durch Epoxidgruppen, die zweite Sorte chemischer Funktionen durch Acrylat-Gruppen, die dritte Sorte chemischer Funktionen durch Amingruppen und die vierte Sorte chemischer Funktionen durch Thiolgruppen gebildet ist.

## Kurze Beschreibung der Zeichnungen

Das vorgeschlagene Verfahren sowie die vorgeschlagenen Klebe- bzw. Matrixsysteme werden nachfolgend anhand von Ausführungsbeispielen in Verbindung mit den Zeichnungen nochmals näher erläutert. Hierbei zeigen:

Fig. 1      eine schematische Darstellung eines beispielhaften Verfahrensablaufes zur Herstellung einer Klebeverbindung mit dem vorgeschlagenen Verfahren;

Fig. 2      Beispiele für Idealformeln der in einem beispielhaften Klebstoff vorhandenen Komponenten;

Fig. 3       Beispiele für Reaktionsmechanismen bei der Härtung des Klebstoffes;

Fig. 4a/b    ein Beispiel einer Zugprüfung an bei 135°C gehärteten Prüfkörpern (a) ohne und (b) mit 40 minütiger UV-Bestrahlung bei einer Stöchiometrie n(Epoxid) : n(Anhydrid) = 1:1,2;

Fig. 5a/b    ein Beispiel einer Zugprüfung an bei 135°C gehärteten Prüfkörpern (a) ohne und (b) mit 40 minütiger UV-Bestrahlung bei einer Stöchiometrie n(Epoxid) : n(Anydrid) = 1=0,7;

Fig. 6a/b    ein Beispiel einer Zugprüfung an bei 125°C gehärteten Prüfkörpern (a) ohne und (b) mit 40 minütiger UV-Bestrahlung bei einer Stöchiometrie n(Epoxid) : n(Anhydrid) = 1:0,4;

Fig. 7a/b    ein Beispiel für den Einfluss der Härtungstemperatur und Bestrahlungsdauer auf die Zugprüfungsergebnisse;

Fig. 8       ein Beispiel für die Shore A-Härte eines mit dem erfindungsgemäßen Verfahren hergestellten Prüfstabes über die Länge des Stabes;

Fig. 9a-d    Ergebnisse von Zug-Dehnungsprüfungen mit unterschiedlichen Klebstoff-Formulierungen.

Fig. 10      Ergebnisse von Zug-Dehnungsprüfungen einer Dual-Cure Formulierung bestehend aus einem Epoxid-Amin System und einem Epoxyacrylat;

Fig. 11      ein Beispiel für den Verlauf der Shore D Härte einer Dual-Cure Formulierung bestehend aus einem Epoxid-Amin System und einem Epoxyacrylat;

Fig. 12      Ergebnisse von Zug-Dehnungsprüfungen einer Klebstoffformulierung mit unterschiedlicher UV-Bestrahlungsdauer: 0min, 0,5min, 1min, 2min und 5 min;

Fig. 13      der Verlauf der Oberflächenhärte einer halbseitig bestrahlten Klebstoffformulierung mit zwei UV-initiierten Vernetzungsmechanismen;

Fig. 14      DSC-Kurven einer Klebstoffformulierung mit zwei UV-initiierten Vernetzungsmechanismen; die Bestrahlungsdauer wurde variiert.

## Wege zur Ausführung der Erfindung

Bei dem vorgeschlagenen Verfahren wird zur Herstellung einer Klebeverbindung ein Klebstoff eingesetzt, der mit zwei Härtungsmechanismen härtbar ist. Ein erster Härtungsmechanismus führt dabei zu einem weicheren flexiblen Produkt und wird in der gesamten Klebstoffschicht ausgelöst. Ein zweiter Härtungsmechanismus erzeugt eine gegenüber dem ersten Härtungsmechanismus erhöhte Steifigkeit und wird lediglich lokal an gewünschten Stellen der Klebeschicht ausgelöst, um eine Variation der Steifigkeit der Klebeschicht nach der Aushärtung zu erreichen. In den folgenden Beispielen wird als erster Härtungsmechanismus eine durch Wärme ausgelöste thermische Härtung und als zweiter Härtungsmechanismus eine UV-Strahlungshärtung eingesetzt. Beispielhafte zur Nutzung bei dem Verfahren geeignete Klebstoffformulierungen werden im Folgenden ebenfalls erläutert.

Figur 1 zeigt hierbei eine schematische Darstellung der Herstellung einer spannungsreduzierten Klebung mit Modulvariation im Klebstoff durch Kombination einer derartigen thermischen Härtung und einer lokalen UV-aktivierten Aufhärtung. Bei dem Verfahren wird zunächst Klebstoff auf den zu verbindenden Bereich des Fügeteils 1 aufgetragen. Anschließend wird mit einer UV-Strahlungsquelle 3 die aufgetragene Klebeschicht 2 nur an bestimmten Stellen bestrahlt. Dies kann bspw. über geeignete Blenden oder durch Nutzung eines Lasers als Lichtquelle erfolgen, dessen Strahl über die zu bestrahlenden Bereiche geführt wird. Anschließend werden das Fügeteil 1 und ein zweites Fügeteil 4 über die Klebstoffschicht 2 verbunden und die Verbindung in einem Ofen 5 thermisch ausgehärtet. Nach der Aushärtung der Klebeverbindung können die beiden verbundenen Teile 6 aus dem Ofen entnommen werden.

Im Folgenden wird zunächst ein Beispiel für die Herstellung einer geeigneten Klebstoffformulierung angeführt.

Die vorgeschlagene Formulierung besteht aus Glycidether GE 100 von Raschig mit Hexahydrophthalsäureanhydrid, Zinkchlorid, heiß gelöst in Acteylaceton, und dem Photoinitiator Irgacure 250 von BASF SE.

Die Herstellung einer erfindungsgemäßen Formulierung mit Glycidether GE100 erfolgte dabei in folgender Weise:

In einen Einwegbecher aus PP, Fassungsvermögen etwa 30 mL, wurden 18 g Epoxidharz Glycidether GE100 vorgelegt. Dann wurden 7.5 g Hexahydrophthalsäure zugegeben, die zuvor bei 50-60°C im Trockenschrank aufgeschmolzen worden waren. Anschließend wurden 0.45 g Irgacure 250 zugegeben und die Mischung manuell mit einem Spatel gemischt. Abschließend wurden 1,50 g einer 80°C warmen, heiß gesättigten Lösung von wasserfreiem Zinkchlorid in Acetylaceton zugegeben und die Mischung manuell mit einem Spatel gemischt.

Für eine Zugprüfung wurden Formulierungen mit den stöchiometrischen Verhältnissen n(Epoxid) : n(Anhydrid) = 1:0,39, n(Epoxid) : n(Anhydrid) = 1:1,2 und n(Epoxid) : n(Anhydrid) = 1:0,7 angefertigt.

Für die Herstellung der Prüfkörper wurde die niederviskose Mischung im Vakuumtrockenschrank dem Vakuum ausgesetzt. Dadurch vergrößerten sich in der Mischung enthaltene Luftblasen sehr stark, stiegen auf und öffneten sich. Es wurde eine augenscheinlich völlig blasenfreie Flüssigkeit erhalten. Die Flüssigkeit wurde mit einer Einwegpipette in eine selbst angefertigte Silikonform für Miniprüfstäbe gefüllt. Die UV-Bestrahlung wurde in einem UV-Cube, Fa. Hoenle, mit einer Quecksilber-Hochdrucklampe in Cold-Mirror-Konfiguration, Bogenlänge 10 cm, Leistung 100 W/cm, durchgeführt. Während der Bestrahlung wurden die Proben in einem Abstand von etwa 50 cm zur Lichtquelle in Raumluft gelagert. Nach der Bestrahlung wurden die Silikonformen in einem auf 80'C vorgewärmten Trockenschrank eingelagert. Sofort danach wurde die Solltemperatur auf 135°C erhöht. Diese Temperatur wurde nach etwa 30 min erreicht. Nach weiteren 60 min wurde der Ofen zum Abkühlen abgeschaltet. Die Silikonformen mit den ausgehärteten Proben wurden nach dem Abkühlen auf Raumtemperatur entnommen und die Prüfstäbe der Zugprüfung unterzogen, bei der die Prüfstäbe bei Raumtemperatur und einer Prüfgeschwindigkeit von 2,5 mm/min bis zum Bruch belastet wurden.

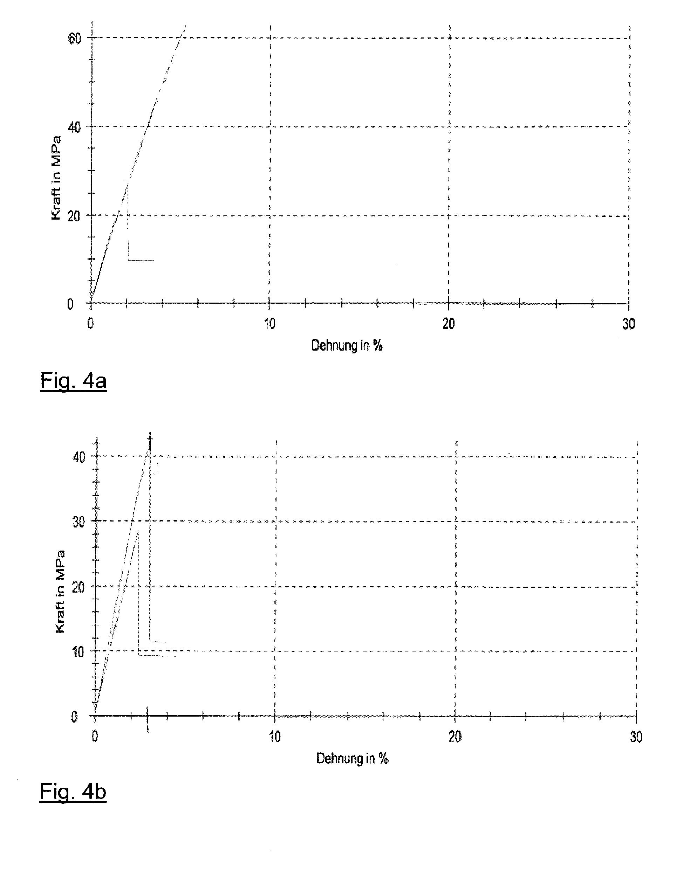

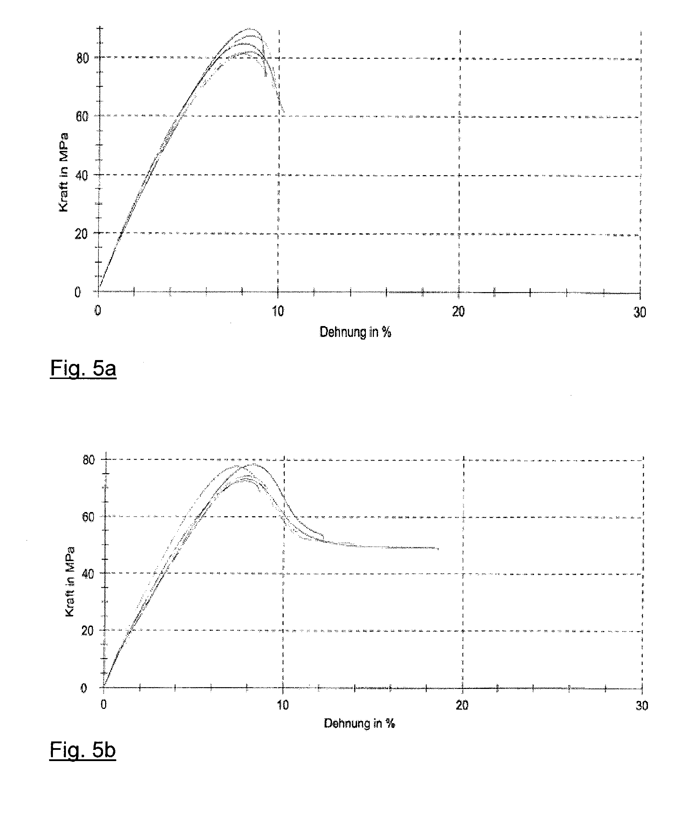

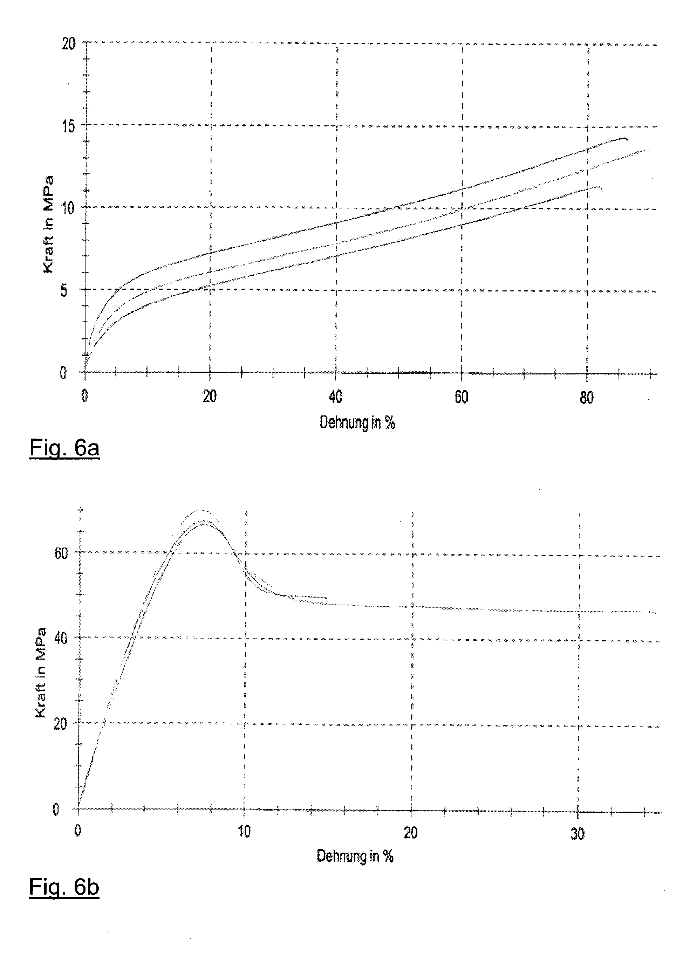

Die Figuren 4 bis 6 zeigen Ergebnisse der Zugprüfungen an Proben, die aus den obigen Formulierungen mit unterschiedlichem stöchiometrischen Verhältnis von n(Epoxid) : n(Anhydrid), alle auf Basis des Harzes Glycidether GE100 und des Hexahydrophthalsäureanhydrids, hergestellt wurden. In den Figuren ist in Teilabbildung (a) jeweils das Ergebnis ohne und in Teilabbildung (b) das Ergebnis mit 40 minütiger UV-Bestrahlung dargestellt. Die Ergebnisse verdeutlichen den Einfluss der Stöchiometrie auf den Unterschied der mechanischen Eigenschaften, der durch zusätzliche UV-Bestrahlung erzielbar ist. Erst durch Reduzieren des Anteils an Anhydrid werden mit und ohne UV-Bestrahlung mechanisch stark unterschiedliche Produkte erhalten.

Bei der Stöchiometrie n(Epoxid) : n(Anhydrid) = 1:0,4 waren infrarotspektroskopisch nach der Härtung Anhydrid, Säure oder Epoxid nicht mehr in signifikanten Mengen nachweisbar, weder in den mit UV-bestrahlten, noch in den anderen Proben. Damit ist die Bedingung erfüllt, dass für ein stabiles Produkt nach der Härtung die reaktiven Gruppen abreagiert sein müssen.

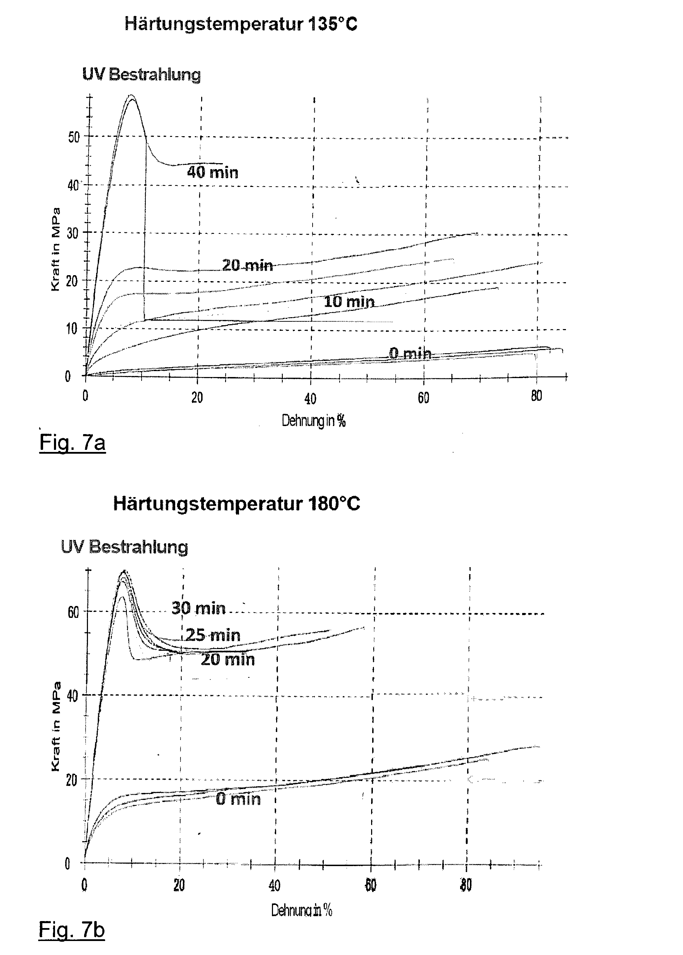

Der aufhärtende Effekt der UV-Bestrahlung kann durch die Bestrahlungsdauer gesteuert werden. Dieses ist besonders signifikant bei niedrigeren Härtungstemperaturen von beispielsweise 135°C. Mit zunehmender Bestrahlungsdauer nehmen E-Modul und Bruchspannung zu, die Bruchdehnung nimmt deutlich ab. Es sind deutliche Unterschiede zwischen 0, 10, 20 und 40 Minuten Bestrahlungsdauer erkennbar, wie in den Figuren 7a und 7b dargestellt. Diese beiden Figuren zeigen die Ergebnisse der Zugprüfungen bei zwei unterschiedlichen Härtungstemperaturen von 135°C (Fig. 7a) und 180°C (Fig. 7b) bei den unterschiedlichen Bestrahlungsdauern. Bei höheren Härtungstemperaturen, beispielsweise bei 180°C kann die Bestrahlungsdauer stark verkürzt werden. Ab einer Bestrahlungsdauer von 20 Minuten ist keine weitere Erhöhung von E-Modul und Bruchspannung mehr sichtbar.

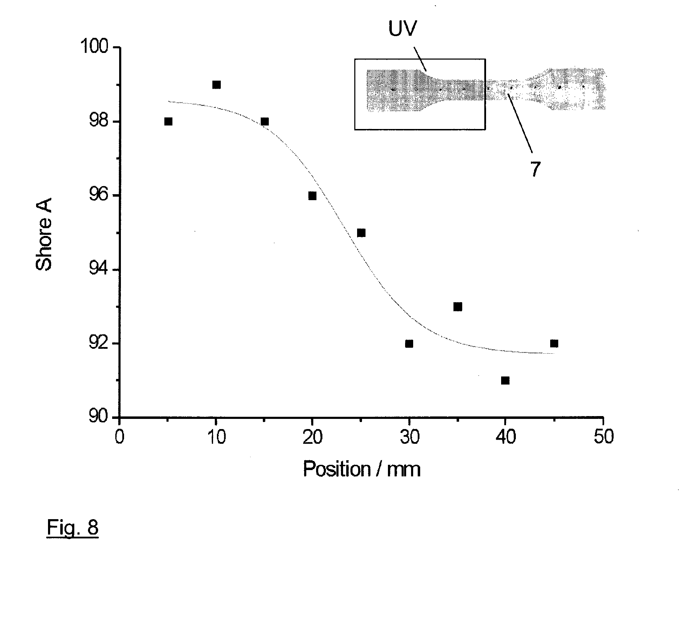

Es wurde auch untersucht, ob der aufhärtende Effekt der UV-Bestrahlung tatsächlich auf den bestrahlten Bereich begrenzt bleibt oder sich bei der thermischen Härtungsreaktion in den unbestrahlten Bereich hinein ausbreitet. Das in Fig. 8 dargestellte Ergebnis dokumentiert, dass der Effekt der UV-Bestrahlung auf das mechanische Verhalten tatsächlich örtlich beschränkt bleibt. Der für die Zugprüfung hergestellte Prüfstab 7 wurde dabei nur auf der linken Seite mit UV-Strahlung beleuchtet, wie im rechten oberen Teil der Figur angedeutet ist. Die rechte Seite des Prüfstabes war während der Bestrahlung lichtundurchlässig abgedeckt. Die Figur 8 zeigt, wie sich die Shore A Eindringhärte über die Länge eines solchen Prüfstabes ändert. Sie ist auf der bestrahlten Seite signifikant erhöht.

Einen Einblick in die Ursachen des mechanisch stark unterschiedlichen Verhaltens liefern Untersuchungen von Formulierungen und ausgehärteten Proben mit der Differentialkolorimetrie (DSC). Diese Untersuchungen bestätigen, dass durch die UV-Bestrahlung tatsächlich eine zusätzliche Vernetzungsreaktion bewirkt wird, die die Proben zusätzlich zur Härtung mit dem Anhydrid aufhärtet. Weiterhin konnte damit verifiziert werden, dass in der bestrahlten Probe die kationische Polymerisation der Epoxidgruppen zusätzlich zur Reaktion des Anhydrids mit OH- und Epoxygruppen zur Vernetzung beiträgt. Die kationische Polymerisation setzt dabei früher als die Anhydridhärtung ein. Die Härtungsreaktion in der bestrahlten Formulierung beginnt deshalb bereits bei etwa 70°C, erreicht eine maximale Geschwindigkeit bei etwa 130°C und war, ebenso wie die Reaktion in der unbestrahlten Probe, bei etwa 180°C abgeschlossen.

Für bestimmte Verfahren, beispielsweise für die Anwendung der erfindungsgemäßen Formulierungen in Klebstoffen, die als Klebefilme verarbeitet werden, kann es notwendig sein, hochmolekulare Epoxidharze zu verwenden, die bei Raumtemperatur fest sind. Deshalb wurde verifiziert, dass sich die erfindungsgemäße Formulierung auf höhermolekulare BPA-Harze übertragen lässt. Allerdings war es nicht möglich, feste Formulierungen zu mischen und zu Prüfkörpern zu verarbeiten. Deshalb musste eine Lösung des untersuchten Festharzes Epikote 1004 verwendet werden. Vorteilhafterweise wurde die Lösung in dem bereits erfolgreich verwendeten Glycidether GE 100 hergestellt. Als Vergleich wurde auch eine Mischung des Glycidethers GE 100 mit dem nicht erfindungsgemäßen, OH-armen, niedermolekularen Flüssigharz Epilox A 19-03 getestet. Mit IR-Spektren kann gezeigt werden, dass das BPA-basierte Flüssigharz Epilox A 19-03 arm an OH-Gruppen ist. Das ebenfalls BPA-basierte, aber hochmolekulare Harz Epikote 1004 weist hingegen einen Gehalt an OH-Gruppen auf, der den des erfolgreich getesteten Flüssigharzes Glycidether GE100 sogar noch übertrifft.

Die Herstellung einer erfindungsgemäßen, hochviskosen Formulierung mit Epikote 1004 und Glycidether GE100 kann beispielsweise in folgender Weise erfolgen:

40 g Glycidether GE100 von Raschig, werden in einem verschließbaren Gefäß mit mechanischem Rührer vorgelegt. Dann werden unter Rühren 10 g Epikote 1004 von Momentive zugegeben. Das Festharz geht unter Rühren langsam in Lösung und die Viskosität der Lösung steigt deutlich an. Um auch nach längerem Rühren verbleibende Feststoffpartikel in Lösung zu bringen, wird die Lösung auf 135°C erwärmt und warm gerührt. Es resultiert eine klare, leicht gelbliche, viskose Harzlösung.

In einem PP-Einwegbecher werden 2 g Glycidether GE100, Raschig, vorgelegt und 9 g der Epikote 1004-Lösung zugegeben. Anschließend werden 4,2 g Hexahydrophthalsäureanhydrid durch Erwärmen im Trockenschrank bei 50-60°C aufgeschmolzen, 0,8 g einer bei 80°C heiß gesättigten Lösung von wasserfreiem Zinkchlorid in Acetylaceton und 0,3 g Irgacure 250, BASF SE, zugegeben. Nach jeder Zugabe wird manuell mit einem Spatel gut durchmischt. Die Mischung wird z.B. im Vakuum von Luftblasen befreit und es werden Prüfstäbe in Silikonformen gegossen. In der Formulierung beträgt das Massenverhältnis m(Epikote 1004) : m(Glycidether GE100) = 16:84, das stöchiometrische Verhältnis n(Epoxid) : n(Anhydrid) = 1:0,38.

Die Herstellung einer nicht erfindungsgemäßen Formulierung mit Epilox A 19-03 und Glycidether GE100 erfolgt in folgender Weise:

In einem PP-Einwegbecher werden 5 g Glycidether GE100, Raschig, vorgelegt und 5 g Epilox A 19-03, Leuna Harze, zugegeben. Anschließend werden 4,2 g Hexahydrophthalsäureanhydrid durch Erwärmen im Trockenschrank bei 50-60°C aufgeschmolzen, 0,8 g einer bei 80°C heiß gesättigten Lösung von wasserfreiem Zinkchlorid in Acetylaceton und 0,3 g Irgacure 250, BASF SE, zugegeben. Nach jeder Zugabe wird manuell mit einem Spatel gut durchmischt.

Die Mischung wird im Vakuum von Luftblasen befreit und es werden Prüfstäbe in Silikonformen gegossen. In der Formulierung beträgt das Massenverhältnis m(Epilox A 19-03) : m(Glycidether GE100) = 1:1, das stöchiometrische Verhältnis n(Epoxid) : n(Anhydrid) = 1:0,45.

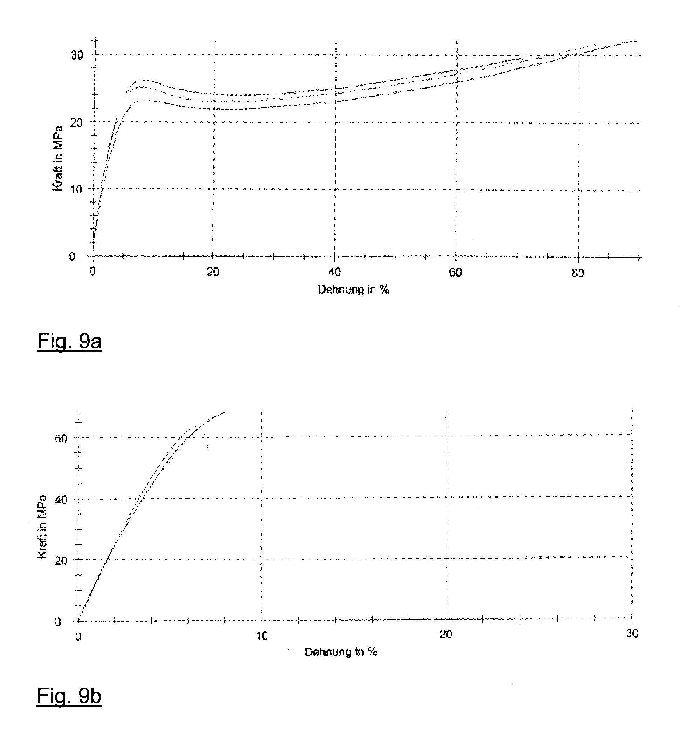

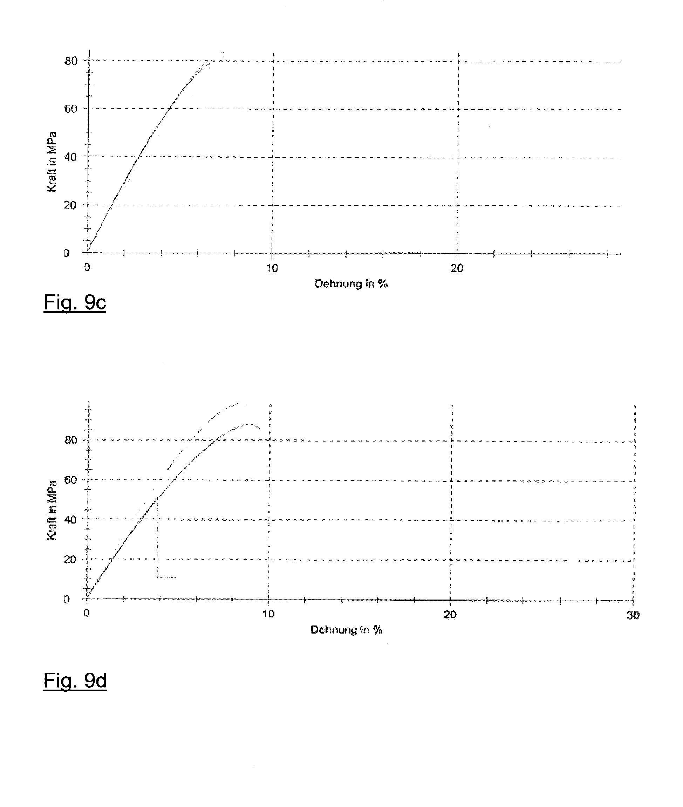

Die Ergebnisse der Zug-Dehnungs-Prüfungen, wie sie in den Fig. 9a - 9d dargestellt sind, belegen, dass sich nur mit der OH-reichen, erfindungsgemäßen Formulierung die gewünschten Variationen in den mechanischen Eigenschaften durch UV-Bestrahlung realisieren lassen. Die Formulierung mit Epikote 1004 und Glycidether GE 100 zeigt durch UV-Bestrahlung eine deutliche Zunahme des E-Moduls um etwa 25% und eine Zunahme der Bruchspannung um etwa 50%, verbunden mit einer sehr deutlichen Abnahme der Bruchdehnung. Die Formulierung mit Epilox A 19-03 und Glycidether GE 100 zeigt kaum eine durch UV-Bestrahlung bewirkte Änderung in den mechanischen Eigenschaften.

Bei dem oben beschriebenen erfindungsgemäßen Epoxidharzsystem werden keine basischen Komponenten verwendet, da sie die kationische UV-Härtung unterbinden. Die Möglichkeit, dieses System durch Zusatz von Füllstoffen oder Additiven an Prozess- oder Anwendungsanforderungen anzupassen, ist dadurch eingeschränkt.

Da sich für die zweite Reaktion des Dual-Cure Systems mit Zn-Salz beschleunigte Anhydride als besonders geeignet erwiesen haben, muss außerdem stets bei hohen Temperaturen T > 120°C gehärtet werden. Die Empfindlichkeit gegen basische Zusätze ist der kationischen UV-Härtung immanent. Es liegt deshalb nahe, stattdessen die ebenfalls industrieübliche, radikalische UV-Härtung als lokalen Mechanismus einzusetzen, die nur von wenigen chemischen Funktionen gestört wird (beispielsweise von Luftsauerstoff). Für Klebstoffe kann die radikalische UV-Härtung allerdings im Gegensatz zur kationischen UV-Härtung bislang nur eingesetzt werden, wenn mindestens ein Fügeteil lichtdurchlässig ist. Eine vor dem Fügen angewandte Präaktivierung ist bei der radikalischen UV-Härtung nicht möglich, weil die Reaktion sofort startet und nach Ende der Bestrahlung in kurzer Zeit völlig zum Erliegen kommt. Dual-Cure Systeme, die eine radikalische UV-Härtung mit einem zweiten Härtungsverfahren kombinieren, sind trotzdem bereits kommerziell für Lacke und Klebstoffe verfügbar, allerdings ist die Zielrichtung dieser Produkte eine andere: Die radikalische UV-Härtung schreitet gewöhnlich nur während der Bestrahlung fort und ist deshalb außerordentlich von der Bestrahlungsintensität abhängig. Es ist deshalb schwierig, bei Gegenständen mit komplexer Geometrie oder gar beschatteten Bereichen sicherzustellen, dass überall ausreichend ausgehärtet wird. Deshalb wird in diesen Systemen versucht, durch Kombination mit einem zweiten Härtungsverfahren überall eine zumindest ausreichende Härtung sicherzustellen. Das Ziel war bisher stets, ein mechanisch möglichst einheitliches Material zu erzeugen.

Mit den Informationen aus der vorliegenden Patentanmeldung ist es für den Fachmann auf dem Gebiet der Klebstoffformulierung jedoch möglich, durch Anpassung der bereits bekannten Systeme gerade die bisher unerwünschten mechanischen Unterschiede zu verstärken, um dadurch zu Klebstoffen zu gelangen, die für die spannungsspitzenreduzierte Klebung oder für die Herstellung von Verbundwerkstoffen oder Verbundwerkstoffschichten mit lokal variierender Steifigkeit tauglich sind.

Folgende Tabelle nennt im Vergleich zum besonders bevorzugten, erfindungsgemäßen Epoxysystem exemplarisch Komponenten bereits bekannter Dual-Cure Systeme, auf deren Basis ebenfalls geeignete Kleb- oder Matrixwerkstoffe nach Anpassung erhalten werden können.

| | Chemische Funktionalität 1 | chemische Funktionalität 2 | Chemische Funktionalität 3 | Lokale Härtung 1 | Gesamthärtung 2 |
|---|---|---|---|---|---|
| Erfindungsgemäße Formulierung | Epoxy | OH | Anhydrid | Kationisch UVpräaktiviert | Thermisch $\geq$ 120°C Anhydrid-OH Anhydrid-Epoxy |
| HENKEL Loctite 3336 | Acrylat (+ acryliertes Epoxidharz) | Epoxy | Amin | Radikalisch UV-Härtung | Thermisch $\geq$ 120°C Acrylat-Amin Epoxy-Amin |
| DELO | Acrylat | NCO | $H_2O$ | Radikalisch | Feuchtehärtung |
| Dualbond AD4950 | (Urethan-Acrylat) | (Urethan-Acrylat) | (Luftfeuchte setzt aus NCO Amin frei) | UV-Härtung | NCO-Amin Acrylat-Amin |

In der vorliegenden Patentanmeldung wurden ein Dual-Cure Verfahren und dafür geeignete Epoxidharzformulierungen beschrieben, mit denen ein mechanischer Gradient in der Klebestoffschicht einer Klebung oder im Matrixmaterial eines Verbundwerkstoffes oder einer Verbundwerkstoffschicht erzeugt werden kann. Die Größe des Unterschieds der mechanischen Eigenschaften, der örtlich begrenzt vorzugsweise durch präaktivierende UV-Bestrahlung erzeugt wird, kann durch die chemische Zusammensetzung des Klebstoffs oder Matrixwerkstoffs, die Bestrahlungsdauer und -intensität und durch die Temperatur der nachfolgenden thermischen Härtung gesteuert werden. Das Verfahren und die erfindungsgemäßen Formulierungen erfüllen die technische Aufgabe, einen mechanischen Gradienten aus einem einzelnen Klebstoff oder Matrixwerkstoff zu erzeugen. Der mechanische Gradient wird beispielsweise benötigt, um spannungsspitzenreduzierte und dadurch besonders feste Klebungen zu erzeugen.

**Weiteres Ausführungsbeispiel**

Um die Einschränkungen der kationischen UV-Härtung von Epoxidharzen zu umgehen, wurden auch erfindungsgemäße Systeme mit einem radikalischen Vernetzungsmechanismus als zweitem, lokal wirkendem Härtungsschritt untersucht, der über UV-Bestrahlung initiiert wird. Im Folgenden wird zunächst ein Beispiel für die Herstellung einer geeigneten Klebstoffformulierung angeführt.

Die vorgeschlagene Formulierung besteht aus dem Epoxyacrylat Sartomer CN104 von Sartomer, Glycidylmethacrylat, einem niedermolekularem Flüssigharz Baxxores ER2200, Isophorondiamin Baxxodur EC201, sowie einem Polyamidharz Versamid 140. Als Fotoinitiator diente Irgacure 819.

Die Herstellung einer erfindungsgemäßen Formulierung erfolgte dabei wie folgt:

In einem Einwegmischgefäß aus PP wurden 10g Flüssigharz Baxxores ER2200 und 7g Sartomer CN104 vorgelegt und im Trockenschrank auf 60°C erwärmt. Anschließend wurden beide Komponenten in einem Speedmixer, Fa. Hauschild & Co KG, bei 2500 UpM unter Vakuum für 2.5 min gemischt. Nach dem Mischvorgang erfolgte die Zugabe von 2g Glycidylmethacrylat, 0.02g Irgacure 819, 1.5g Baxxodur und 3.4g Versamid 140. Abschließend wurde die Mischung für 4 min unter Vakuum im Speedmixer bei 2500 UpM gemischt.

Für die Herstellung von Prüfkörpern für Zugprüfungen wurde die viskose Formulierung mit einer Einwegpipette in eigens dafür angefertigte Silikonformen für Miniprüfstäbe gefüllt. Die Bestrahlung erfolgte in einem UV-Cube der Fa. Hoenle, mit einer Quecksilber-Hochdrucklampe in Cold-Mirror-Konfiguration, Bogenlänge 10 cm, Leistung 100 W/cm. Die Bestrahlungsdauer betrug 0.5 min, 1 min, 2 min und 5 min, eine Probenreihe wurde unbestrahlt belassen. Nach dem Bestrahlen wurden die Proben in den auf 80°C vorgeheizten Ofen überführt. Nach 30 min wurde die Temperatur auf 135°C erhöht. Nach weiteren 60 min wurde der Ofen auf 180°C geheizt. Die Silikonformen mit den Probekörpern wurden nach 60 min bei 180°C entnommen. Nach dem Abkühlen konnten die Prüfköper aus den Formen entnommen werden. Die Zugprüfung erfolgte mit einer Prüfgeschwindigkeit von 2.5 mm/min bis zum Bruch. Um Härtemessungen durchführen zu können wurden eigens dafür gefertigte Teflonformen für größere Prüfstäbe mit der Formulierung befüllt. Anschließend wurden sie halbseitig mit einer Metallplatte abgedeckt und im UV-Cube 5 min bestrahlt. Die Aushärtung erfolgte gemäß der zuvor beschriebenen Prozedur. Die nach dem Abkühlen der Form entnommenen Probekörper wurden dann mit einem Shore Härte Prüfgerät, Fa. Zwick, untersucht.

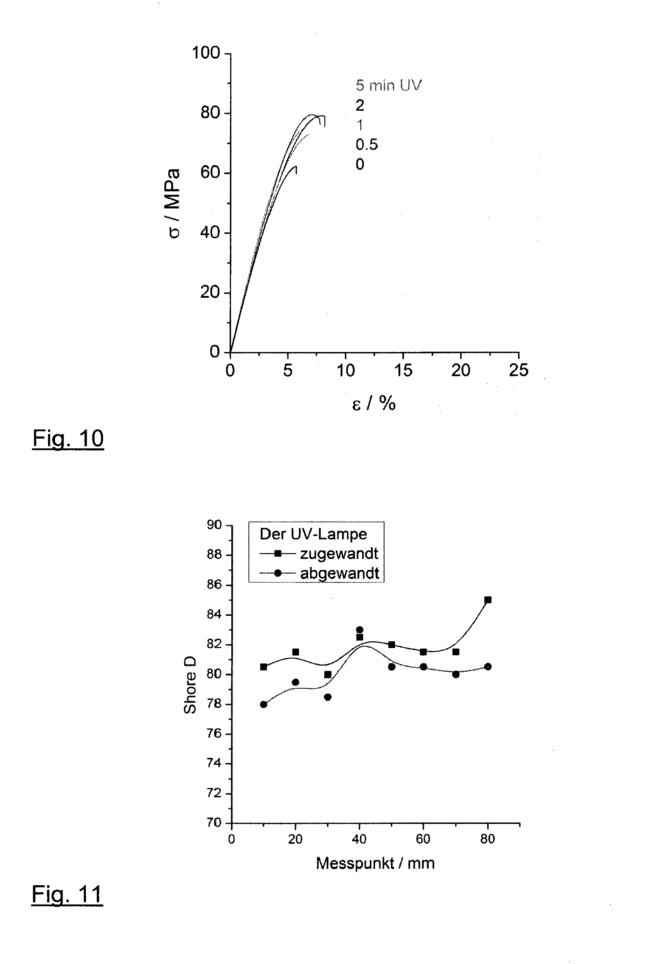

Die Ergebnisse der Zugprüfungen von oben aufgezeigter Formulierung sind in Fig. 10 dargestellt. In dieser Abbildung sind neben der Kurve des unbestrahlten Klebstoffs auch die Kurven der unterschiedlich lang belichteten Proben abgebildet. Die Ergebnisse zeigen, dass bereits bei einer Bestrahlungsdauer von nur 0.5 min ein Aufhärtungseffekt bewirkt werden kann. Dieser ist jedoch sehr gering und deutlich unter 30%. Längere Bestrahlungszeiten scheinen dagegen keinen weiteren Einfluss auf die Härte des Materials zu besitzen. In Fig. 11 ist der Verlauf der Oberflächenhärte eines nur halbseitig belichteten Prüfstabs dargestellt. Um zu zeigen, dass die Härtungsreaktion über die gesamte Schichtdicke homogen verläuft wurde die Oberflächenhärte sowohl auf der der UV-Lampe zugewandten Seite (schwarz), als auch auf der abgewandten (rot) Seite bestimmt. Der Verlauf der Kurven lässt eine Tendenz zu höheren Werten durch Bestrahlung lediglich erahnen. Allerdings erkennt man auch, dass die Härte von Vorder- und Rückseite nahezu gleich ist und die W-Härtungsreaktion somit gleichmäßig über die gesamte Dicke der Probe verlaufen ist.

Für erfindungsgemäße Formulierungen reicht der Aufhärtungseffekt einer solchen einfachen Dual-Cure Formulierung bestehend aus einem Epoxid-Amin-System und einer Acrylatkomponente scheinbar nicht aus. Daher wurde verifiziert in wie weit der Aufhärtungseffekt verstärkt werden kann, falls ein dritter ebenfalls durch UV-Bestrahlung ausgelöster Vernetzungsmechanismus in das System eingebracht wird. Die UV-Bestrahlung als zweiter Härtungsmechanismus würde in diesem Fall somit zwei unterschiedliche Vernetzungsmechanismen auf einmal auslösen: Neben der radikalischen Polymerisation der Acrylate sollte die Aufhärtung durch eine Thiol-En-Reaktion gezielt verstärkt werden. Hierfür wurde anstatt des Epoxyacrylates ein ungesättigtes, acryliertes Polyesterharz, Desmolux XP 2764 Fa. Bayer, verwendet. Neben den Acrylatgruppen, die auf bekannte Art und Weise radikalisch polymerisiert werden können, besitzt dieses Harz Doppelbindungen über die zusätzlich vernetzt werden kann. Diese sind jedoch nicht über die übliche freie radikalische Polymerisation zugänglich. Sie können jedoch mit Thiolen und demselben Fotoinitiator wie er auch für die radikalische Polymerisation der Acrylatgruppen genutzt wird über eine Thiol-En-Reaktion miteinander verknüpft werden und somit die Vernetzungsdichte im bestrahlten Bereich deutlich erhöhen.

Die Herstellung einer solchen erfindungsgemäßen Formulierung erfolgte wie folgt:

In einem Einwegmischgefäß aus PP wurden 10g Flüssigharz Baxxores ER2200, 7g Desmolux XP 2764, 2g Glycidylmethacrylat, 1.5g Baxxodur und 3.4g Versamid 140 vorgelegt. Die Komponenten wurden in einem Speedmixer, Fa. Hauschild & Co KG, bei 2500 UpM unter Vakuum gemischt. Nach dem Mischvorgang erfolgte die Zugabe von 0.02g Irgacure 819 und 2g Thiocure PETMP, Fa. Bruno Bock. Die Mischung wurde abschließend für 2.5 min im Speedmixer bei 2500 UpM im Vakuum gemischt und möglichst schnell weiterverarbeitet.

Für die Herstellung von Prüfkörpern für Zugprüfungen wurde die viskose Formulierung mit einer Einwegpipette in eigens dafür angefertigte Silikonformen für Miniprüfstäbe gefüllt. Die Bestrahlung erfolgte in einem UV-Cube der Fa. Hoenle, mit einer Quecksilber-Hochdrucklampe in Cold-Mirror-Konfiguration, Bogenlänge 10 cm, Leistung 100 W/cm. Die Bestrahlungsdauer betrug 0.5 min, 1 min, 2 min und 5 min, eine Probenreihe wurde unbestrahlt belassen. Nach dem Bestrahlen wurden die Proben in den auf 80°C vorgeheizten Ofen überführt. Nach 30 min wurde die Temperatur auf 135°C erhöht. Nach weiteren 60 min wurde der Ofen auf 180°C geheizt. Die Silikonformen mit den Probekörpern wurden nach 60 min bei 180°C entnommen. Nach dem Abkühlen konnten die Prüfköper aus den Formen entnommen werden. Die Zugprüfung erfolgte mit einer Prüfgeschwindigkeit von 2.5 mm/min bis zum Bruch. Um Härtemessungen durchführen zu können wurden eigens dafür gefertigte Teflonformen für größere Prüfstäbe mit der Formulierung befüllt. Anschließend wurden sie halbseitig mit einer Metallplatte abgedeckt und im UV-Cube 5 min bestrahlt. Die UV-Bestrahlung als zweiter Härtungsmechanismus der hier beschriebenen Formulierung löst dabei zwei unterschiedliche Vernetzungsreaktionen gleichzeitig aus, nämlich eine radikalische Polymerisation der Acrylatgruppen, sowie eine Thiol-En-Reaktion zwischen den Thiolen und den Doppelbindungen der ungesättigten Polyesterharze. Die thermische Aushärtung erfolgte im Ofen gemäß der zuvor beschriebenen Herstellung der Probekörper für Zugprüfungen. Die nach dem Abkühlen der Form entnommenen Probekörper wurden dann mit einem Shore Härte Prüfgerät, Fa. Zwick, untersucht.

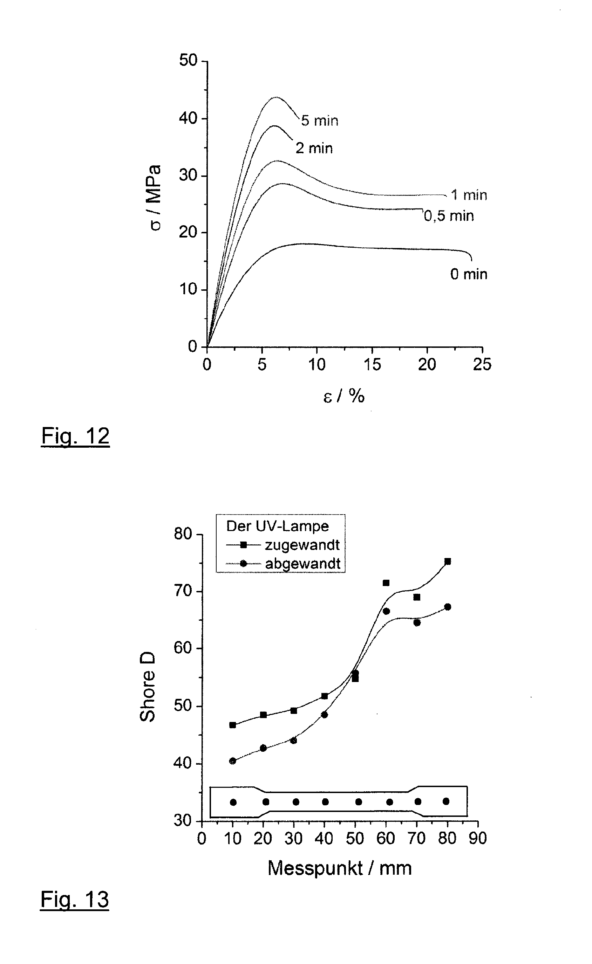

Die Formulierung konnte sowohl mit als auch ohne Bestrahlung thermisch ausgehärtet werden. Die Ergebnisse der Zugprüfungen sind in Fig. 12 dargestellt. Die Kurven zeigen eindrucksvoll wie die Härte und die Dehnbarkeit der Formulierung über die Bestrahlungsdauer über einen sehr weiten Bereich variiert werden können. Bereits eine Bestrahlung von nur 0.5 s führt zu einer erheblichen Aufhärtung des Materials. Bestrahlungsdauern von über 5 min brachten hingegen keine weitere Steigerung der Härte. Mit der Aufhärtung einher geht eine leichte Versprödung des Materials. Da sowohl die radikalische Polymerisation als auch die Thiol-En Reaktion nicht präaktivierend sondern nur während der Belichtung ablaufen, darf die Formulierung nach der Bestrahlung nicht bereits soweit ausgehärtet sein, dass ein anschließendes Fügen dadurch unmöglich gemacht wird. Erstaunlicher Weise bleibt die Formulierung auch nach der Belichtung klebrig, sie wird lediglich deutlich viskoser. Fügen müsste mit einer solchen Formulierung daher noch möglich sein. Der Verlauf der Oberflächenhärte eines zur Hälfte belichteten Prüfkörpers ist in Fig. 13 dargestellt. Es ist sehr schön der graduelle Verlauf der Shore D Härte zu erkennen, wobei ein großer Bereich von 40 Shore D bis 70 Shore D abgedeckt werden kann. Die Werte von Vorder- und Rückseite des Prüfstabes stimmen ebenfalls gut überein, so dass von einer homogenen Härtungsreaktion über den gesamten Prüfkörperquerschnitt ausgegangen werden kann.

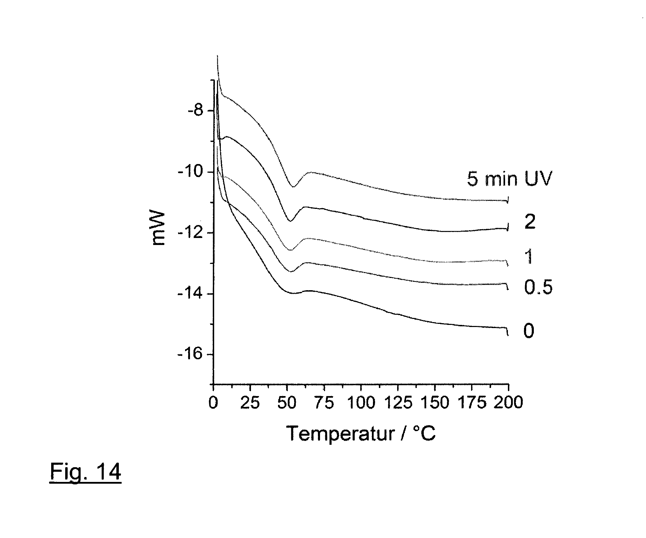

Die thermischen Eigenschaften der unterschiedlich lang belichteten Proben sind in Fig. 14 dargestellt. Die DSC-Messungen zeigen, dass auch die Glasübergangstemperatur durch zunehmende Bestrahlungsdauer leicht gesteigert werden konnte. Auch dies beweist, dass mit der Bestrahlung eine Erhöhung der Vernetzungsdichte einhergeht. Infrarotspektroskopische Untersuchungen zeigten sowohl in den belichteten, als auch in den nicht belichteten ausgehärteten Proben keine reaktiven Gruppen wie Epoxide, Amine oder Thiole in signifikanten Mengen. Da Thiole besonders unter Wärmezufuhr sehr schnell mit Epoxiden reagieren können ist anzunehmen, dass in den nicht bestrahlten Proben überschüssiges Thiol auf diese Weise abreagiert. Die dadurch überschüssigen Aminogruppen können wiederum thermisch über eine Michael-Addition mit den Acrylatfunktionen abreagieren. Letztere konnten aufgrund von Überlagerungen nicht im speziellen betrachtet werden. Damit ist die Bedingung erfüllt, dass für ein stabiles Produkt nach der Härtung die reaktiven Gruppen abreagiert sein müssen.

Der stabile Endzustand wird dabei sowohl mit als auch ohne Bestrahlung erreicht, bei dem die reaktiven Gruppen abreagiert sind, d.h. es sollen keine reaktiven Gruppen im fertigen Produkt nachweisbar sein, was auch IR-spektroskopisch so nachgewiesen werden konnte. Wichtig hierfür ist, dass die reaktiven Gruppen im unbestrahlten Bereich auch thermisch abreagieren können.

Zusammenfassend ist festzuhalten, dass bei der thermischen Härtung, wie oben beschrieben, andere Reaktionen ablaufen als im Falle einer UV-Bestrahlung. Die Funktionen, die für den zweiten Härtungsmechanismus vorgesehen sind, können auch thermisch abreagieren: Thiole reagieren dabei mit Epoxiden, dadurch überschüssiges Amin kann mit Acrylaten via einer Michaeladdition reagieren, so dass auch in den unbestrahlten Bereichen keine bzw. möglichst wenige reaktive Gruppen übrig bleiben. Eine radikalische Polymerisation der Acrylatfunktionen oder eine Thiol-En-Reaktion, wie sie durch Bestrahlen mit UV-Licht ausgelöst werden, laufen bei der rein thermischen Härtung der Formulierung nicht ab.

Für den Fachmann auf dem Gebiet der Klebstoffformulierung ist es in einfacher Weise möglich, mit den Hinweisen aus dieser Patentanmeldung bereits bekannte, aber chemisch von der besonders bevorzugten Ausführungsform abweichende Dual-Cure Systeme so anzupassen, dass gezielt die bisher unerwünschten Inhomogenitäten in den mechanischen Eigenschaften hervorgerufen und verstärkt werden, um damit zu Klebstoffen für die spannungsspitzenreduzierte Klebung oder zu entsprechenden Matrixwerkstoffen für Verbundwerkstoffe zu gelangen.

Bezugszeichenliste

1    Fügeteil
2    Klebstoffschicht
3    UV-Lichtquelle
4    weiteres Fügeteil
5    Ofen
6    verbundene Fügeteile
7    Prüfstab

**Patentansprüche**

1. Verfahren zur Herstellung einer Klebeverbindung zwischen zwei Bauteilen, bei dem

   - ein Klebstoff eingesetzt wird, der mit wenigstens zwei unterschiedlichen Härtungsmechanismen aushärtbar ist, von denen ein erster Härtungsmechanismus eine geringere Steifigkeit des Klebstoffes erzeugt als wenigstens ein zweiter Härtungsmechanismus, und
   - eine zur Verbindung der Bauteile aufgebrachte Schicht des Klebstoffes mit dem ersten Härtungsmechanismus im Bereich zwischen den Bauteilen über die gesamte Schicht und mit wenigstens dem zweiten Härtungsmechanismus nur lokal gehärtet wird, so dass die Steifigkeit der Schicht des Klebstoffes im Bereich zwischen den Bauteilen variiert.

2. Verfahren zur Herstellung eines Verbundwerkstoffes oder einer Verbundwerkstoffschicht aus Fasern und/oder Teilchen eines ersten Materials, die in einen Matrixwerkstoff eingebettet sind, bei dem

   - ein Matrixwerkstoff eingesetzt wird, der mit wenigstens zwei unterschiedlichen Härtungsmechanismen aushärtbar ist, von denen ein erster Härtungsmechanismus eine geringere Steifigkeit des Matrixwerkstoffes erzeugt als wenigstens ein zweiter Härtungsmechanismus,
   - der Matrixwerkstoff nach Vermischung mit den Fasern und/oder Teilchen mit dem ersten Härtungsmechanismus über den gesamten Verbundwerkstoff oder die gesamte Verbundwerkstoffschicht und mit wenigstens dem zweiten Härtungsmechanismus nur lokal gehärtet wird, so dass die Steifigkeit des Matrixwerkstoffes über den Verbundwerkstoff oder die Verbundwerkstoffschicht variiert.

3. Verfahren nach Anspruch 2,
**dadurch gekennzeichnet,**
**dass** der Matrixwerkstoff mit dem ersten Härtungsmechanismus nur auf einer Seite des Verbundwerkstoffes oder der Verbundwerkstoffschicht gehärtet wird, so dass die Steifigkeit des Matrixwerkstoffes auf einer Seite des Werkstoffes oder der Schicht höher als auf der gegenüberliegenden Seite ist.

4. Verfahren nach Anspruch 1,
**dadurch gekennzeichnet,**
**dass** die Schicht des Klebstoffes mit wenigstens dem zweiten Härtungsmechanismus bei einer überlappenden Klebung lokal so gehärtet wird, dass die Steifigkeit der Schicht des Klebstoffes im überlappenden Bereich von der Mitte der Überlappung zu den Rändern hin abnimmt.

5. Verfahren nach einem der Ansprüche 1 bis 4,
**dadurch gekennzeichnet,**
**dass** der Kleb- oder Matrixwerkstoff mit wenigstens dem zweiten Härtungsmechanismus lokal so gehärtet wird, dass ein kontinuierlicher Verlauf der Steifigkeit über die Schicht oder den Werkstoff erhalten wird.

6. Verfahren nach einem der Ansprüche 1 bis 5,
**dadurch gekennzeichnet,**
**dass** der Kleb- oder Matrixwerkstoff so gewählt und gehärtet wird, dass die Steifigkeit des Kleb- oder Matrixwerkstoffes über die Schicht oder den Werkstoff um mindestens 30% variiert.

7. Verfahren nach einem der Ansprüche 1 bis 6,
**dadurch gekennzeichnet,**
**dass** als erster Härtungsmechanismus eine thermische Härtung eingesetzt wird.

8. Verfahren nach einem der Ansprüche 1 bis 7,
**dadurch gekennzeichnet,**
**dass** als wenigstens zweiter Härtungsmechanismus eine UV-Härtung eingesetzt wird.

9. Verfahren nach Anspruch 8,
**dadurch gekennzeichnet,**
**dass** die durch wenigstens den zweiten Härtungsmechansimus erreichte Steifigkeit über die UV-Intensität und/oder Bestrahlungsdauer variiert wird.

10. Verfahren nach Anspruch 8 oder 9,
**dadurch gekennzeichnet,**
**dass** der Klebstoff so gewählt wird, dass wenigstens der zweite Härtemechanismus den Klebstoff in einer ersten Stufe durch Einstrahlung von UV-Strahlung zunächst nur modifiziert und eine endgültige Aushärtung durch wenigstens den zweiten Härtemechanismus erst in einer zweiten Stufe durch thermische Einwirkung erfolgt.

11. Verfahren nach Anspruch 10,
**dadurch gekennzeichnet,**
**dass** die Schicht des Klebstoffes zunächst auf eines der Bauteile aufgebracht und durch UV-Strahlung lokal bestrahlt wird, danach die beiden Bauteile miteinander verbunden werden und anschließend der erste Härtungsmechanismus ausgelöst und die Aushärtung durch wenigstens den zweiten Härtungsmechanismus durch thermische Einwirkung abgeschlossen wird.

12. Verfahren nach einem der Ansprüche 1 bis 11,
**dadurch gekennzeichnet,**
**dass** ein Kleb- oder Matrixwerkstoff eingesetzt wird, der

- mindestens eine erste Sorte chemischer Funktionen aufweist, die sowohl reaktiv im ersten als auch wenigstens im zweiten Härtungsmechanismus sind,
- mindestens eine zweite Sorte chemischer Funktionen aufweist, die reaktiv im ersten Härtungsmechanismus sind, und

- mindestens eine dritte Sorte chemischer Funktionen aufweist, die als Vernetzer sowohl mit der ersten als auch mit der zweiten Sorte chemischer Funktionen reagieren kann, und

**dass** sowohl durch den ersten Härtungsmechanismus als auch durch den zweiten Härtungsmechanismus ein stabiler Endzustand erreicht wird, bei dem reaktive Gruppen abreagiert sind.

**13.** Verfahren nach Anspruch 12,
**dadurch gekennzeichnet,**
**dass** ein Kleb- oder Matrixwerkstoff eingesetzt wird, bei dem die ersten und zweiten chemischen Funktionen gemeinsam an Molekülen des Kleb- oder Matrixwerkstoffes vorhanden sind.

**14.** Verfahren nach Anspruch 12 oder 13,
**dadurch gekennzeichnet,**
**dass** ein Kleb- oder Matrixwerkstoff eingesetzt wird, bei dem die erste Sorte chemischer Funktionen durch Epoxidgruppen, die zweite Sorte chemischer Funktionen durch OH-Gruppen und die dritte Sorte chemischer Funktionen durch die Carbonsäurefunktion und/oder Carbonsäureanhydridfunktion gebildet ist.

**15.** Verfahren nach Anspruch 14,
**dadurch gekennzeichnet,**
**dass** ein Kleb- oder Matrixwerkstoff eingesetzt wird, bei dem die OH-Gruppen in einer ausreichenden Menge vorliegen, um überschüssiges Anhydrid oder daraus gebildete Carbonsäure durch Reaktion zu binden, die bei einer Aushärtung nicht durch die Epoxidgruppen zur Reaktion gebracht wurden.

**16.** Verfahren nach einem der Ansprüche 12 bis 15,
**dadurch gekennzeichnet,**
**dass** ein Kleb- oder Matrixwerkstoff eingesetzt wird, bei dem ein stöchiometrisches Verhältnis zwischen den die erste Sorte chemischer Funktionen tragenden Komponenten und den die dritte Sorte chemischer Funktionen tragenden Komponenten größer als 1:0,7 beträgt.

**17.** Verfahren nach einem der Ansprüche 1 bis 11,
**dadurch gekennzeichnet**,
bei dem als erster Härtungsmechanismus eine thermische Härtung eingesetzt wird, bei dem als wenigstens zweiter Härtungsmechanismus eine UV-Härtung eingesetzt wird,
bei dem die UV-Härtung durch wenigstens zwei unterschiedliche UV-initiierte Vernetzungsmechanismen erfolgt.

**18.** Verfahren nach Anspruch 17,
**dadurch gekennzeichnet, dass**
als erster Vernetzungsmechanismus eine radikalische Polymerisation erfolgt, und
dass als zweiter Vernetzungsmechanismus Doppelbindungen in einer Komponente des Kleb- oder Matrixwerkstoffes mit Thiolen reagieren und eine Vernetzung über eine Thiol-En-Reaktion erfolgt.

**19.** Verfahren nach Anspruch 17 oder 18,
**dadurch gekennzeichnet, dass**
dass ein Kleb- oder Matrixwerkstoff eingesetzt wird, der

- mindestens eine erste Sorte chemischer Funktionen aufweist, die reaktiv im ersten Härtungsmechanismus sind,
- mindestens eine zweite Sorte chemischer Funktionen aufweist, die reaktiv sowohl im ersten als auch wenigstens im zweiten Härtungsmechanismus sind,
- mindestens eine dritte Sorte chemischer Funktionen aufweist, die als Vernetzer sowohl mit der ersten als auch mit der zweiten Sorte chemischer Funktionen reagieren kann,
- mindestens eine vierte Sorte chemischer Funktionen aufweist, die reaktiv sowohl im ersten als auch wenigstens im zweiten Härtungsmechanismus sind, und

dass sowohl durch den ersten Härtungsmechanismus als auch durch den wenigstens zweiten Härtungsmechanismus ein stabiler Endzustand erreicht wird, bei dem reaktive Gruppen abreagiert sind.

**20.** Verfahren nach Anspruch 19,

**dadurch gekennzeichnet,**
**dass** ein Kleb- oder Matrixwerkstoff eingesetzt wird, bei dem die erste Sorte chemischer Funktionen durch Epoxidgruppen, die zweite Sorte chemischer Funktionen durch Acrylat-Gruppen, die dritte Sorte chemischer Funktionen durch Amingruppen und die vierte Sorte chemischer Funktionen durch Thiolgruppen gebildet ist.

21. Kleb- oder Matrixwerkstoff, insbesondere zur Herstellung einer Klebeverbindung oder einer Verbundwerkstoffschicht nach einem der Patentansprüche 1 bis 16,
der mit wenigstens zwei unterschiedlichen Härtungsmechanismen aushärtbar ist, von denen ein erster Härtungsmechansimus eine geringere Steifigkeit des Kleb- oder Matrixwerkstoffes erzeugt als wenigstens ein zweiter Härtungsmechanismus,
und der

- mindestens eine erste Sorte chemischer Funktionen aufweist, die sowohl reaktiv im ersten als auch wenigstens im zweiten Härtungsmechanismus sind,
- mindestens eine zweite Sorte chemischer Funktionen aufweist, die reaktiv wenigstens im zweiten Härtungsmechanismus sind, und
- mindestens eine dritte Sorte chemischer Funktionen aufweist, die als Vernetzer sowohl mit der ersten als auch mit der zweiten Sorte chemischer Funktionen reagieren kann,

wobei die erste Sorte chemischer Funktionen durch Epoxidgruppen, die zweite Sorte chemischer Funktionen durch OH-Gruppen und die dritte Sorte chemischer Funktionen durch die Carbonsäurefunktion und/oder Carbonsäureanhydridfunktion gebildet ist.

22. Kleb- oder Matrixwerkstoff nach Anspruch 21,
**dadurch gekennzeichnet,**
**dass** die ersten und zweiten chemischen Funktionen gemeinsam an Molekülen des Kleb- oder Matrixwerkstoffes vorhanden sind.

23. Kleb- oder Matrixwerkstoff nach Anspruch 21 oder 22,
**dadurch gekennzeichnet,**
**dass** die OH-Gruppen in einer ausreichenden Menge vorliegen, um überschüssiges Anhydrid oder daraus gebildete Carbonsäure durch Reaktion zu binden, die bei einer Aushärtung nicht durch die Epoxidgruppen zur Reaktion gebracht wurden.

24. Kleb- oder Matrixwerkstoff nach einem der Ansprüche 21 bis 23,
**dadurch gekennzeichnet,**
**dass** ein stöchiometrisches Verhältnis zwischen den die erste Sorte chemischer Funktionen tragenden Komponenten und den die dritte Sorte chemischer Funktionen tragenden Komponenten größer als 1:0,7 beträgt.

25. Kleb- oder Matrixwerkstoff, insbesondere zur Herstellung einer Klebeverbindung oder einer Verbundwerkstoffschicht nach einem der Patentansprüche 17 bis 20,
der mit wenigstens zwei unterschiedlichen Härtungsmechanismen aushärtbar ist, von denen ein erster Härtungsmechansimus eine geringere Steifigkeit des Kleb- oder Matrixwerkstoffes erzeugt als wenigstens ein zweiter Härtungsmechanismus,
und der

- mindestens eine erste Sorte chemischer Funktionen aufweist, die reaktiv im ersten Härtungsmechanismus sind,
- mindestens eine zweite Sorte chemischer Funktionen aufweist, die reaktiv sowohl im ersten als auch wenigstens im zweiten Härtungsmechanismus sind,
- mindestens eine dritte Sorte chemischer Funktionen aufweist, die als Vernetzer sowohl mit der ersten als auch mit der zweiten Sorte chemischer Funktionen reagieren kann, und
- mindestens eine vierte Sorte chemischer Funktionen aufweist, die reaktiv sowohl im ersten als auch wenigstens im zweiten Härtungsmechanismus sind.

26. Kleb- oder Matrixwerkstoff nach Anspruch 25, **dadurch gekennzeichnet, dass** die erste Sorte chemischer Funktionen durch Epoxidgruppen, die zweite Sorte chemischer Funktionen durch AcrylatGruppen, die dritte Sorte chemischer Funktionen durch Amingruppen und die vierte Sorte chemischer Funktionen durch Thiolgruppen gebildet ist.

Fig. 1

Fig. 2

(a)

+ Oligomere des Bisphenol-A-Diglycidylethers

(b)
Fig. 3

Fig. 4a

Fig. 4b

Fig. 5a

Fig. 5b

Fig. 6a

Fig. 6b

## Härtungstemperatur 135°C

Fig. 7a

## Härtungstemperatur 180°C

Fig. 7b

Fig. 8

Fig. 9a

Fig. 9b

EP 2 695 924 A2

Fig. 9c

Fig. 9d

26

Fig. 10

Fig. 11

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4952342 A
- US 5547713 A
- US 20030207956 A
- DE 10347652 A1
- DE 102007015261 A1
- US 5977682 A
- DE 60207075 T2